# EUROPÄISCHE PATENTSCHRIFT

(11) **EP 3 564 092 B1**
(45) Veröffentlichungstag und Bekanntmachung des Hinweises auf die Patenterteilung: **24.03.2021**
(21) Anmeldenummer: 19170142.4
(22) Anmeldetag: 18.04.2019
(51) Int. Cl.: B62B 1/26, B62B 3/10, B68B 9/00, B68C 1/00, A47B 81/00, B62B 1/20, A47B 31/00, A47B 47/00, A47B 47/05, A47B 87/00

(54) **SATTELSCHRANK**
SADDLE CABINET
ARMOIRE POUR SELLE

(30) Priorität: 04.05.2018 DE 102018206971
(43) Veröffentlichungstag der Anmeldung: 06.11.2019
(73) Patentinhaber: WKF-GmbH Metallwarenfabrik, 99610 Sömmerda (DE)
(72) Erfinder: Gröger-Balcke, Ricca, 76534 Baden-Baden (DE)
(74) Vertreter: Liedtke & Partner Patentanwälte

(56) Entgegenhaltungen:
- EP-A1- 1 300 361
- DE-A1-102004 030 492
- DE-U1- 8 711 486
- NL-A- 8 701 691
- US-A1- 2011 049 843
- US-A1- 2013 264 924
- US-A1- 2015 008 660

## Beschreibung

Die Erfindung betrifft einen Sattelschrank.

Aus dem Stand der Technik sind allgemein Sattelschränke, auch als Sattelkisten bezeichnet, bekannt, welche zur Aufnahme und zum Schutz eines Sattels und von Gegenständen einer Reitausrüstung sowie von Zubehörgegenständen vorgesehen sind.

Einen solchen Sattelschrank für eine Pferdebox beschreibt beispielsweise die DE 197 22 012 C2, wobei der Sattelschrank einen Schrankkorpus mit einer Vorderwand mit Türen, einer Rückwand, Seitenwänden, einem Boden sowie einer Deckenplatte besitzt. Der Sattelschrank ist weiterhin mit einer in den Schrankkorpus eingebauten Halterung für einen Sattel versehen.

Weiterhin beschreibt die DE 87 02 451 U1 eine Sattelkiste mit eingebautem Sattelbock. Die Sattelkiste umfasst eine durch eine Tür schließbare frontseitige Öffnung und eine durch eine Deckelklappe schließbare deckseitige Öffnung in einem Korpus.

Weiterhin sind aus dem Stand der Technik mobile Sattelschränke, auch als Turniersattelschränke bezeichnet, bekannt, bei welchen der Schrankkorpus auf einer Anzahl von Rädern angeordnet ist.

Die US 5,791,668 A beschreibt einen klappbaren Sattelträger zum Tragen eines Sattels oder mehrerer Sättel, von Zubehör und Reitsportausrüstung. Der Sattelträger umfasst einen rollbaren Rahmen, der mit einer ausziehbaren Sattelstützerhöhung ausgestattet ist, die an einem Ende schwenkbar am Rahmen befestigt ist. Weiterhin umfasst der Sattelträger einen Griff, der schwenkbar an der Sattelstützerhöhung und dem Rahmen derart befestigt ist, so dass eine Betätigung von federbelasteten Einstellstiften, die mit der Sattelstützerhöhung und dem Griff verbunden sind, ein selektives Einziehen und Ausfahren der Sattelstützerhöhung und des Griffs in Bezug auf den Rahmen ermöglicht. Eine Sattelbrettstütze ist schwenkbar an einem freien, teleskopartigen Ende der Sattelstützerhöhung angebracht und ist durch einen Schwenkstift steuerbar, um eine horizontale Ausrichtung des Sattelbretthalters einzustellen, wenn das Teleskopende der Sattelstützerhöhung durch Vorwärtsbewegung des Griffs angehoben wird. Ein oder zwei Sätze verstellbarer Sattelbretter können abnehmbar an der Sattelbrettstütze angebracht sein, um einen Sattel oder ein Paar von Sätteln auf dem klappbaren Sattelträger unterzubringen.

Weiterhin sind aus der US 2015/008660 A1 und der US 2011/049843 A1 fahrbare Wagen bekannt, welche jeweils ein Bodenelement, ein Deckenelement und eine Rahmenstruktur umfassen, welche das Bodenelement und das Deckenelement miteinander verbindet.

Die Dokumente DE8711486 U1 und US2013/264924 A1 offenbaren modulare Schränke des Standes der Technik.

Der Erfindung liegt die Aufgabe zu Grunde, einen gegenüber dem Stand der Technik verbesserten Sattelschrank anzugeben.

Die Aufgabe wird erfindungsgemäß mit einem Sattelschrank gelöst, welcher die im Anspruch 1 angegebenen Merkmale aufweist.

Vorteilhafte Ausgestaltungen der Erfindung sind Gegenstand der Unteransprüche.

Der Sattelschrank umfasst ein Basiselement mit einem Bodenabschnitt, ein Aufsatzelement mit einem Deckenabschnitt und eine Rahmenstruktur mit einem ersten Rahmenabschnitt, welcher mit dem Basiselement verbunden ist. Weiterhin umfasst die Rahmenstruktur einen zweiten Rahmenabschnitt, welcher mit dem Aufsatzelement verbunden ist, und eine Rahmenverbindungsanordnung, welche eingerichtet ist, den ersten Rahmenabschnitt und den zweiten Rahmenabschnitt zerstörungsfrei lösbar miteinander zu verbinden.

Der Sattelschrank ist im Gegensatz zu aus dem Stand der Technik bekannten Sattelschränken in einfacher Weise zerstörungsfrei lösbar und somit reversibel montierbar und demotierbar. Im demontierten Zustand zeichnet sich der Sattelschrank bzw. zeichnen sich dessen Komponenten durch geringe Abmessungen aus und ist bzw. sind deshalb in einfacher Weise, beispielsweise in einem Kofferraum eines Personenkraftwagens oder in kleinen Pferdeanhängern, transportierbar. Gegenüber klappbaren und/oder fahrbaren Sattelständern zeichnet sich der im montierten Zustand geschlossene Sattelschrank dagegen durch die Möglichkeit einer geschützten Unterbringung zumindest eines Sattels und von Gegenständen einer Reitausrüstung sowie von Zubehörgegenständen aus.

Dabei umfasst die Rahmenverbindungsanordnung mehrere Rahmeneckprofile, welche zwischen dem ersten Rahmenabschnitt und dem zweiten Rahmenabschnitt angeordnet sind. Diese Rahmeneckprofile ermöglichen eine einfache Montage und Demontage des Sattelschranks bei gleichzeitig großer Stabilität desselben im montierten Zustand. Ferner ermöglichen die Rahmeneckprofile eine hohe Flexibilität bei der Montage des Sattelschranks und dessen Abmessungen im montierten Zustand. Dabei ist es beispielsweise möglich, aus einem Baukastensystem Rahmeneckprofile in unterschiedlicher Größe und/oder Menge zu wählen, um eine Höhe des Sattelschranks und somit ein Volumen zur Aufnahme eines Sattels oder mehrerer Sättel sowie weiterer Gegenstände an eine jeweilige Nutzung anzupassen.

Weiterhin umfasst der Sattelschrank zumindest eine Wandanordnung und/oder zumindest eine Türanordnung, welche zwischen zwei benachbart angeordneten Rahmeneckprofilen angeordnet oder anordbar sind bzw. ist. Dabei umfassen die Rahmeneckprofile Befestigungsstrukturen zur Befestigung der zumindest einen Wandanordnung und/oder zumindest einen Türanordnung. Mittels der zumindest einen Wandanordnung und/oder der zumindest einen Türanordnung ist der Sattelschrank verschließbar, wobei die Wandanordnung und/oder Türanordnung aufgrund der Befestigungsstrukturen in einfacher Weise an den Rahmeneckprofilen montierbar und von diesen demotierbar sind bzw. ist.

Erfindungsgemäß umfassen die Befestigungsstrukturen der Rahmeneckprofile jeweils zumindest eine Führungsnut, in welcher die Wandanordnung und/oder Türanordnung, insbesondere bei demontiertem Deckenelement, in besonders einfacher Weise anordbar sind bzw. ist. Dabei sind die Befestigungsstrukturen derart ausgebildet, dass die Wandanordnung und/oder Türanordnung innerhalb dieser verschiebbar anordbar sind bzw. ist.

In einer möglichen Ausgestaltung des Sattelschranks sind die Rahmeneckprofile jeweils mit einem ersten Ende mit dem ersten Rahmenabschnitt und einem zweiten Ende mit dem zweiten Rahmenabschnitt gekoppelt, wobei die Rahmeneckprofile und die Rahmenabschnitte an jeweils miteinander gekoppelten Abschnitten miteinander korrespondierende Verbindungselemente umfassen, welche zu einer kraft- und/oder formschlüssigen Verbindung der Rahmeneckprofile mit dem ersten Rahmenabschnitt und dem zweiten Rahmenabschnitt eingerichtet sind. Dies ermöglicht eine einfache, mit geringem Zeitaufwand herstellbare und zuverlässige Kopplung der Rahmeneckprofile mit den Rahmenabschnitten.

In einer möglichen Weiterbildung des Sattelschranks sind miteinander korrespondierende Verbindungselemente Bestandteil eines Spannverschlusses. Derartige Spannverschlüsse, auch als Hebelverschlüsse bezeichnet, zeichnen sich durch eine besonders einfache Bedienbarkeit, eine hohe Verschlusskraft, große Langlebigkeit und Zuverlässigkeit aus.

Eine mögliche Ausgestaltung des Sattelschranks sieht vor, dass Abmessungen der Rahmeneckprofile kleiner sind als Abmessungen einer freien Fläche des Bodenabschnitts. Hieraus resultiert die Möglichkeit, dass die Rahmeneckprofile innerhalb eines von Basiselement und Deckenelement begrenzten Volumens aufgenommen werden können und somit in einfacher und geordneter Weise transportierbar sind.

Zu diesem Zweck sieht eine weitere mögliche Ausgestaltung des Sattelschranks vor, dass die erste Rahmenstruktur und die zweite Rahmenstruktur unmittelbar miteinander koppelbar sind und hierzu beispielsweise an jeweils miteinander gekoppelten Abschnitten miteinander korrespondierende Verbindungselemente umfassen, welche zu einer kraft- und/oder formschlüssigen Verbindung der Rahmenabschnitte eingerichtet sind. Hierdurch ist es möglich, aus Basiselement und Deckenelement eine Einheit mit geringen Abmessungen und somit hoher Mobilität und einfacher Transportierbarkeit zu bilden.

Gemäß einer weiteren möglichen Ausgestaltung des Sattelschranks umfasst die zumindest eine Wandanordnung mehrere plattenförmige Wandelemente und/oder die zumindest eine Türanordnung umfasst mehrere plattenförmige Türelemente. Der Aufbau von Wandanordnung und/oder Türanordnung aus mehreren Elementen ermöglicht eine einfache Montage derselben und aufgrund von geringen Abmessungen der Wandelemente und/oder Türelemente auch eine einfache Handhabung derselben während der Montage, Demontage und während eines Transports.

Gemäß einer möglichen Weiterbildung des Sattelschranks sind die Wandelemente im montierten Zustand des Sattelschranks relativ zueinander beweglich und/oder die Türelemente relativ zueinander beweglich. Hierdurch wird ermöglicht, dass der Sattelschrank im montierten Zustand einfach aus einem geöffneten in einen geschlossenen Zustand überführt werden kann und umgekehrt.

In einer möglichen Ausgestaltung des Sattelschranks ist vorgesehen, dass Abmessungen der zumindest einen Wandanordnung und/oder der zumindest einen Türanordnung bzw. der Wandelemente und/oder Türelemente jeweils kleiner sind als Abmessungen einer freien Fläche des Bodenabschnitts. Hieraus resultiert die Möglichkeit, dass die Wandanordnung und/oder Türanordnung innerhalb des von Basiselement und Deckenelement begrenzten Volumens aufgenommen werden können bzw. kann und somit in einfacher und geordneter Weise transportierbar sind bzw. ist.

In einer weiteren möglichen Ausgestaltung des Sattelschranks ist vorgesehen, dass an einer Außenseite des Basiselements eine Anzahl von Rädern angeordnet ist, welche eine rollende bzw. fahrende und somit eine einfache, mit geringem Kraftaufwand realisierbare Fortbewegung des Sattelschranks ermöglicht und dessen Mobilität erhöht.

In einer möglichen Weiterbildung des Sattelschranks ist vorgesehen, dass die Räder zerstörungsfrei lösbar am Basiselement befestigt und somit insbesondere für den Transport des Sattelschranks in einfacher Weise von diesem demontierbar und an diesem montierbar sind.

Beispielsweise sind Abmessungen der Räder jeweils kleiner als Abmessungen einer freien Fläche des Bodenabschnitts, so dass die Räder innerhalb des von Basiselement und Deckenelement begrenzten Volumens aufgenommen werden können und somit in einfacher und geordneter Weise transportierbar sind.

Erfindungsgemäß ist vorgesehen, dass der Sattelschrank zumindest ein Halteelement und/oder zumindest ein Aufnahmeelement zum Halten bzw. zur Aufnahme eines Sattels, und gegebenenfalls von Gegenständen einer Reitausrüstung und/oder gegebenenfalls von Zubehörgegenständen umfasst, wobei das zumindest eine Halteelement und/oder das zumindest eine Aufnahmeelement zerstörungsfrei lösbar mit der Rahmenstruktur gekoppelt sind bzw. ist. Die zerstörungsfrei lösbare Kopplung des zumindest einen Halteelements und/oder zumindest einen Aufnahmeelements ermöglicht eine einfache Montage und Demontage dieser mit der Rahmenstruktur. Auch ist es möglich, je nach Anforderung eines Nutzers an den Sattelschrank eine Anzahl und/oder Ausführung/Art des zumindest einen Halteelements und/oder zumindest einen Aufnahmeelements variabel anzupassen und somit eine variable Nutzung des Sattelschranks zu ermöglichen.

Ausführungsbeispiele der Erfindung werden im Folgenden anhand von Zeichnungen näher erläutert.

Darin zeigen:
- Figur 1: schematisch eine Seitenansicht eines Sattelschranks,
- Figur 2: schematisch eine perspektivische Ansicht des Sattelschranks gemäß Figur 1,
- Figur 3: schematisch einen Ausschnitt einer Draufsicht einer Außenseite einer Front des Sattelschranks gemäß Figur 1 im Bereich eines Türschlosses,
- Figur 4: schematisch einen Ausschnitt einer perspektivischen Ansicht einer Innenseite einer Front des Sattelschranks gemäß Figur 1 im Bereich eines Türschlosses,
- Figur 5: schematisch eine weitere Seitenansicht des Sattelschranks gemäß Figur 1 mit einer abschnittsweise transparenten Darstellung,
- Figur 6: schematisch eine weitere perspektivische Ansicht des Sattelschranks gemäß Figur 1 mit demontierten Wandanordnungen und demontierter Türanordnung,
- Figur 7: schematisch einen Ausschnitt einer perspektivischen Ansicht einer Innenseite des Sattelschranks gemäß Figur 1,
- Figur 8: schematisch einen Ausschnitt einer perspektivischen Ansicht einer Außenseite des Sattelschranks gemäß Figur 1 im Bereich eines Befestigungselements für eine Wandanordnung mit demontierter Wandanordnung,
- Figur 9: schematisch einen Ausschnitt einer perspektivischen Ansicht einer Außenseite des Sattelschranks gemäß Figur 1 im Bereich eines Befestigungselements für eine Wandanordnung mit montierter Wandanordnung,
- Figur 10: schematisch einen Ausschnitt einer perspektivischen Ansicht einer Außenseite des Sattelschranks gemäß Figur 1 im Bereich eines Befestigungselements für eine Wandanordnung mit montierter Wandanordnung und montiertem Sicherungsblech,
- Figur 11: schematisch eine perspektivische Ansicht eines Deckenelements des Sattelschranks gemäß Figur 1,
- Figur 12: schematisch eine weitere perspektivische Ansicht eines Deckenelements des Sattelschranks gemäß Figur 1,
- Figur 13: schematisch eine weitere perspektivische Ansicht des Sattelschranks gemäß Figur 1 mit demontiertem Deckenelement,
- Figur 14: schematisch eine weitere perspektivische Ansicht des Sattelschranks gemäß Figur 1 mit demontiertem Deckenelement und demontiertem Halteelement,
- Figur 15: schematisch eine perspektivische Ansicht mehrerer Rahmeneckprofile des Sattelschranks gemäß Figur 1,
- Figur 16: schematisch eine perspektivische Ansicht eines Basiselements des Sattelschranks gemäß Figur 1 mit darin aufgenommenen Komponenten des Sattelschranks,
- Figur 17: schematisch eine perspektivische Ansicht eines Sattelschranks,
- Figur 18: schematisch eine weitere perspektivische Ansicht des Sattelschranks gemäß Figur 17,
- Figur 19: schematisch eine perspektivische Ansicht eines Sattelschranks,
- Figur 20: schematisch eine perspektivische Ansicht des Sattelschranks gemäß Figur 19 mit einer geöffneten Wandanordnung und einer geöffneten Türanordnung,
- Figur 21: schematisch eine perspektivische Ansicht mehrerer Rahmeneckprofile des Sattelschranks gemäß Figur 19,
- Figur 22: schematisch einen Ausschnitt einer perspektivischen Ansicht einer Innenseite des Sattelschranks gemäß Figur 19,
- Figur 23: schematisch eine perspektivische Detaildarstellung eines Sicherungselements des Sattelschranks gemäß Figur 19,
- Figur 24: schematisch eine Draufsicht einer Querschnittsfläche eines Rahmeneckprofils des Sattelschranks gemäß Figur 19,
- Figur 25: schematisch eine perspektivische Ansicht eines Rahmenprofils des Sattelschranks gemäß Figur 19 und
- Figur 26: schematisch eine Draufsicht einer Querschnittsfläche des Rahmenprofils gemäß Figur 24.

Einander entsprechende Teile sind in allen Figuren mit den gleichen Bezugszeichen versehen.

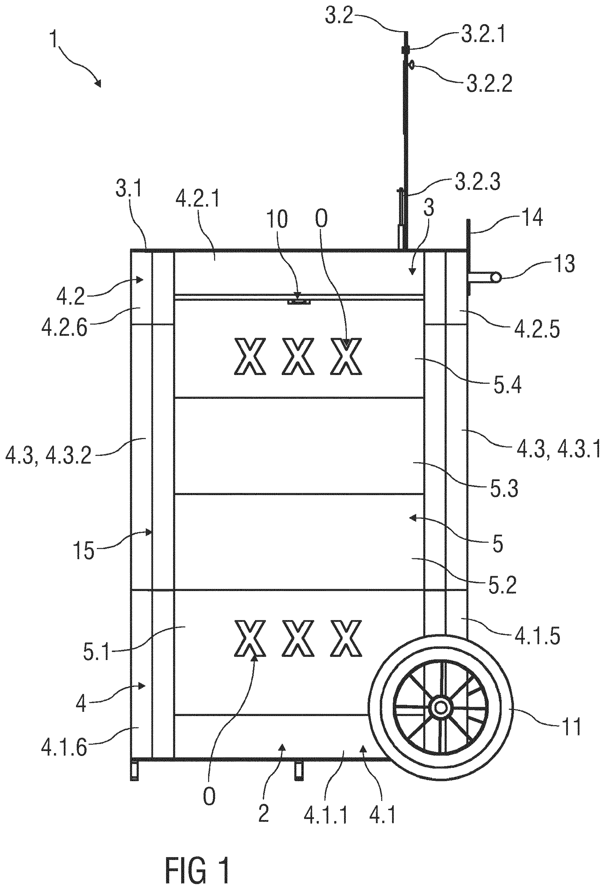

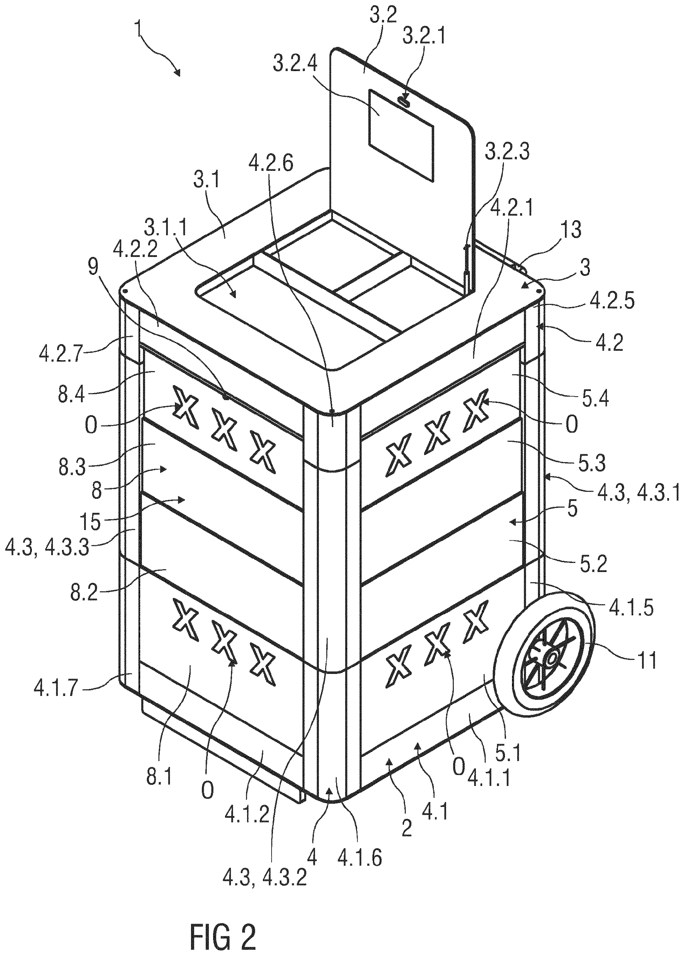

In **Figur 1** ist eine Seitenansicht eines möglichen Ausführungsbeispiels eines Sattelschranks 1 dargestellt. **Figur 2** zeigt eine perspektivische Ansicht des Sattelschranks 1.

Der Sattelschrank 1, auch als Sattelkiste bezeichnet, ist zur Aufnahme und zum Schutz eines nicht näher dargestellten Sattels und von Gegenständen einer Reitausrüstung, beispielsweise eines Zaumzeugs, sowie von Zubehörgegenständen, wie Reinigungs- und Pflegemitteln, ausgebildet. Der Sattelschrank 1 weist in der dargestellten Ausführung beispielsweise eine Höhe von 1100 mm und eine Breite und Tiefe von jeweils 700 mm auf. Alternativ weist der Sattelschrank 1 beispielsweise eine Höhe von 1000 mm und eine Breite und Tiefe von jeweils 600 mm auf. Alternativ weist der Sattelschrank 1 beispielsweise eine Höhe von 1100 mm, eine Breite von 700 mm und eine Tiefe von 600 mm auf.

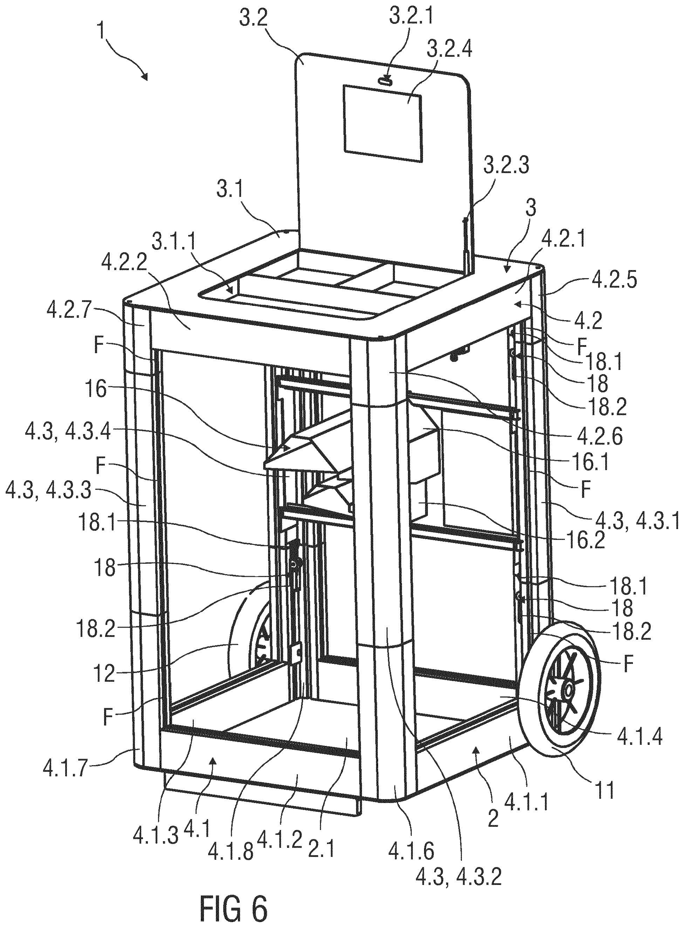

Der Sattelschrank 1 weist an seiner Unterseite ein Basiselement 2 mit einem in Figur 6 näher dargestellten Bodenabschnitt 2.1 und an seiner Oberseite ein Aufsatzelement 3 mit einem Deckenabschnitt 3.1 auf.

Das Aufsatzelement 3 umfasst im dargestellten Ausführungsbeispiel einen im Deckenabschnitt 3.1 ausgebildeten Raum 3.1.1 zur Aufnahme von Gegenständen und einen klappbaren Deckel 3.2 zum Verschluss des Raums 3.1.1, wobei der Deckel 3.2 in einer möglichen Ausgestaltung mittels eines Deckelschlosses 3.2.1 abschließbar ausgebildet ist und einen Deckelgriff 3.2.2 zur Betätigung umfasst. Der Deckel 3.2 ist vorliegend geöffnet dargestellt. Weiterhin sind der Deckel 3.2 und der Deckenabschnitt 3.1 mittels eines Klappendämpfers 3.2.3 miteinander gekoppelt, welcher einen Öffnungsvorgang des Deckels 3.2 unterstützt und den Deckel 3.2 in der geöffneten Position hält. Der Raum 3.1.1 ist beispielsweise ein Aufbewahrungsfach, in dem kleinere Gegenstände, wie z. B. Bürsten, Schwämme oder auch persönliche Accessoires, verstaut werden können. An der Unterseite des aufklappbaren Deckels 3.2 ist in einer möglichen Ausgestaltung ein Spiegel 3.2.4 angeordnet.

Weiterhin umfasst der Sattelschrank 1 eine Rahmenstruktur 4 mit einem ersten Rahmenabschnitt 4.1, welcher mit dem Basiselement 2 verbunden ist, einem zweiten Rahmenabschnitt 4.2, welcher mit dem Aufsatzelement 3 verbunden ist, und einer Rahmenverbindungsanordnung 4.3, welche eingerichtet ist, den ersten Rahmenabschnitt 4.1 und den zweiten Rahmenabschnitt 4.2 zerstörungsfrei lösbar miteinander zu verbinden.

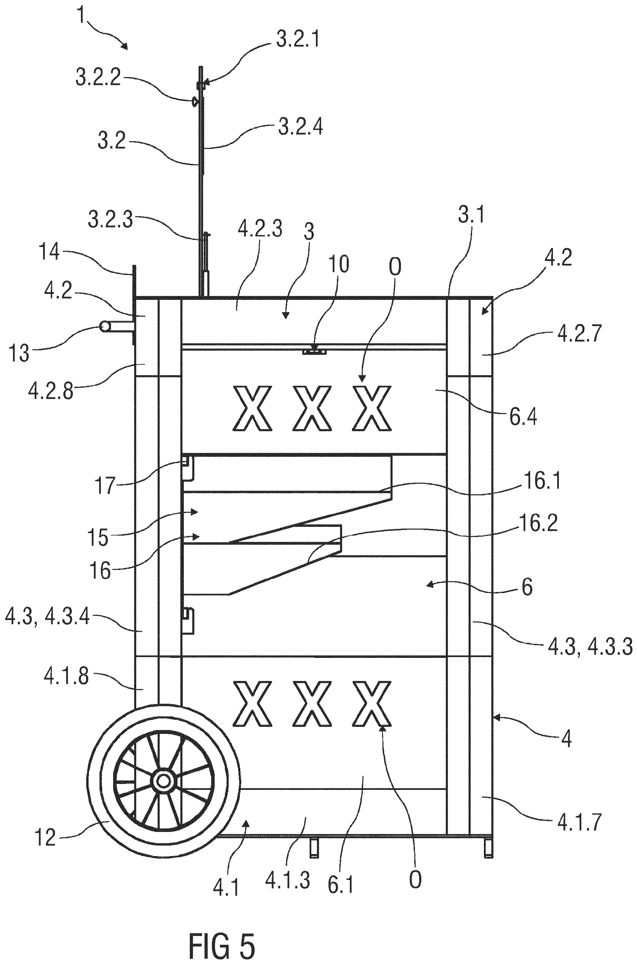

Der erste Rahmenanschnitt 4.1 umfasst dabei vier Rahmenprofile 4.1.1 bis 4.1.4, welche horizontal und parallel zu einem jeweiligen Rand des Bodenabschnitts 2.1 des Basiselements 2 an diesem befestigt sind und einen viereckigen Bodenabschnitt 2.1 definieren und randseitig begrenzen, wobei das Rahmenprofil 4.1.3 in Figur 5 und das Rahmenprofil 4.1.4 in Figur 6 näher dargestellt ist. Der erste Rahmenanschnitt 4.1 umfasst weiterhin vier an den Ecken des viereckigen Bodenabschnitts 2.1 befestigte und vertikal zu diesem angeordnete Rahmeneckprofile 4.1.5 bis 4.1.8, wobei das Rahmeneckprofil 4.1.8 in Figur 5 näher dargestellt ist.

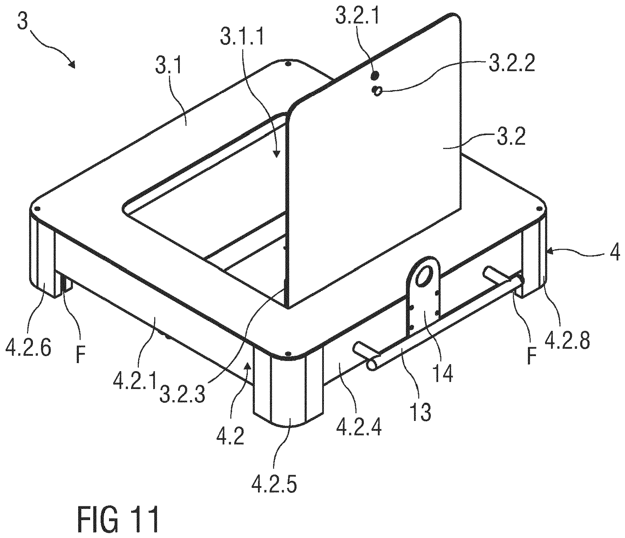

Auch der zweite Rahmenanschnitt 4.2 umfasst vier Rahmenprofile 4.2.1 bis 4.2.4, welche horizontal und parallel zu einem jeweiligen Rand des Deckenabschnitts 3.1 des Aufsatzelements 3 an diesem befestigt sind und einen viereckigen Deckenabschnitt 3.1 definieren und randseitig begrenzen, wobei das Rahmenprofil 4.2.3 in Figur 5 und das Rahmenprofil 4.2.4 in Figur 11 näher dargestellt ist. Der zweite Rahmenanschnitt 4.2 umfasst weiterhin vier an den Ecken des viereckigen Deckenabschnitts 3.1 befestigte und vertikal zu diesem angeordnete Rahmeneckprofile 4.2.5 bis 4.2.8, wobei das Rahmeneckprofil 4.2.8 in Figur 5 näher dargestellt ist.

Die Rahmenabschnitte 4.1, 4.2 sind beispielsweise aus Metall, z. B. Aluminium, verzinktem Stahl oder Edelstahl, Holz oder Kunststoff gebildet. Die Rahmenabschnitte 4.1, 4.2 können weiterhin zumindest teilweise lackiert und/oder pulverbeschichtet sein.

Die Rahmenverbindungsanordnung 4.3 umfasst mehrere Rahmeneckprofile 4.3.1 bis 4.3.4, welche zwischen dem ersten Rahmenabschnitt 4.1 und dem zweiten Rahmenabschnitt 4.2 angeordnet sind, insbesondere die Rahmeneckprofile 4.1.5 bis 4.1.8 des ersten Rahmenanschnitts 4.1 mit den Rahmeneckprofilen 4.2.5 bis 4.2.8 des zweiten Rahmenanschnitts 4.2 miteinander verbinden. Das Rahmeneckprofil 4.3.4 ist dabei in Figur 5 näher dargestellt. Die Rahmeneckprofile 4.3.1 bis 4.3.4 sind beispielsweise aus Metall, z. B. Aluminium, verzinktem Stahl oder Edelstahl, Holz oder Kunststoff gebildet. Die Rahmeneckprofile 4.3.1 bis 4.3.4 können weiterhin zumindest teilweise lackiert und/oder pulverbeschichtet sein.

Der Sattelschrank 1 umfasst weiterhin drei Wandanordnungen 5 bis 7 und eine Türanordnung 8, welche jeweils zwischen zwei benachbart angeordneten Rahmeneckprofilen 4.3.1 bis 4.3.4 angeordnet sind.

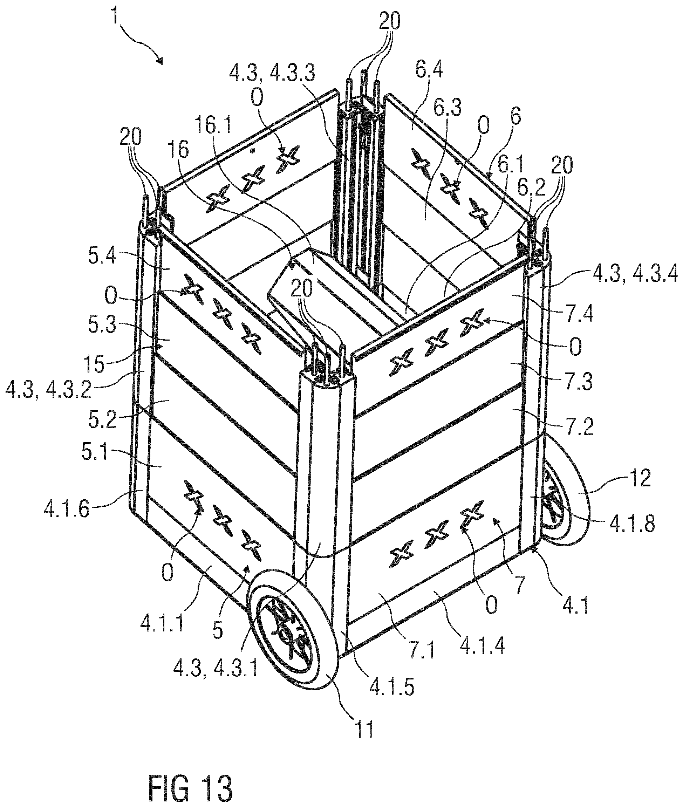

Die Wandanordnungen 5 bis 7 umfassen mehrere übereinander, mit Stirnseiten aneinander grenzende plattenförmige Wandelemente 5.1 bis 5.4, 6.1 bis 6.4, 7.1 bis 7.4, wobei die Wandanordnung 6 und die zugehörigen Wandelemente 6.1 bis 6.4 sowie die Wandanordnung 7 und die zugehörigen Wandelemente 7.1 bis 7.4 in Figur 13 näher dargestellt sind. Dabei sind die Wandelemente 5.1 bis 5.4, 6.1 bis 6.4, 7.1 bis 7.4 beispielsweise aus Metall, z. B. Aluminium, verzinktem Stahl oder Edelstahl, Holz oder Kunststoff gebildet. Die Wandelemente 5.1 bis 5.4, 6.1 bis 6.4, 7.1 bis 7.4 können weiterhin zumindest teilweise lackiert und/oder pulverbeschichtet sein.

Die Türanordnung 8 umfasst mehrere übereinander, mit Stirnseiten aneinander grenzende plattenförmige Türelemente 8.1 bis 8.4, wobei die Türelemente 8.1 bis 8.4 im dargestellten montierten Zustand des Sattelschranks 1 relativ zueinander beweglich sind. Dabei sind die Türelemente 8.1 bis 8.4 beispielsweise aus Metall, z. B. Aluminium, verzinktem Stahl oder Edelstahl, Holz oder Kunststoff gebildet. Die Türelemente 8.1 bis 8.4 können weiterhin zumindest teilweise lackiert und/oder pulverbeschichtet sein.

Beispielsweise ist ein unteres Türelement 8.1 unbeweglich an den Rahmeneckprofilen 4.1.6, 4.1.7 angeordnet und oberhalb des unteren Türelements 8.1 angeordnete Türelemente 8.2 bis 8.4 sind beweglich, insbesondere in vertikaler Richtung verschiebbar, an den Rahmeneckprofilen 4.3.2, 4.3.3 und den Rahmeneckprofilen 4.2.6, 4.2.7 des zweiten Rahmenabschnitts 4.2 angeordnet. Hierzu umfassen die Rahmeneckprofile 4.3.2, 4.3.3 der Rahmenverbindungsanordnung 4.3, die Rahmeneckprofile 4.1.6, 4.1.7 des ersten Rahmenabschnitts 4.1 und die Rahmeneckprofile 4.2.6, 4.2.7 des zweiten Rahmenabschnitts 4.2 jeweils Führungsnuten F.

Zu einem Öffnen der Türanordnung 8 ausgehend von einem dargestellten geschlossenen Zustand, sind die Türelemente 8.2 bis 8.4 nach unten hinter das Türelement 8.1 bewegbar, wobei die Türelemente 8.1 bis 8.4 im geöffneten Zustand der Türanordnung 8 mit ihren Flachseiten zumindest im Wesentlichen parallel zueinander und hintereinander angeordnet sind.

Um die Türanordnung 8 zu schließen, wird ausgehend vom geöffneten Zustand ein oberes Türelement 8.4 nach oben bewegt. Dabei sind die Türelemente 8.2 bis 8.4 derart teleskopartig miteinander gekoppelt, dass die unterhalb des oberen Türelements 8.4 beweglich angeordneten Türelemente 8.2, 8.3 jeweils ab Überschreiten einer definierten Position des oberen Türelements 8.4 mitbewegt werden. Somit sind auch die weiteren Türelemente 8.2, 8.3 mittels eines am oberen Türelement 8.4 angeordneten und von einer Außenseite des Sattelschranks 1 betätigbaren Türschlosses 9 an dem Aufsatzelement 3 befestigt und gesichert. Im geschlossenen Zustand der Türanordnung 8 überlappen sich die benachbart angeordneten Türelemente 8.1 bis 8.4 und das obere Türelement 8.4.

Im dargestellten Ausführungsbeispiel sind auch die Wandelemente 5.1 bis 5.4, 6.1 bis 6.4, 7.1 bis 7.4 entsprechend den Türelementen 8.1 bis 8.4 teleskopartig miteinander verbunden, wobei die jeweils unteren Wandelemente 5.1, 6.1, 7.1 unbeweglich an den zugehörigen Rahmeneckprofilen 4.1.5 bis 4.1.8 angeordnet sind. Jeweils oberhalb der unteren Wandelemente 5.1, 6.1, 7.1 angeordnete Wandelemente 5.2 bis 5.4, 6.2 bis 6.4, 7.2 bis 7.4 sind beweglich, insbesondere in vertikaler Richtung verschiebbar, an den Rahmeneckprofilen 4.3.1 bis 4.3.4 der Rahmenverbindungsanordnung 4.3 und an den Rahmeneckprofilen 4.2.5 bis 4.2.8 des zweiten Rahmenabschnitts 4.2 angeordnet. Hierzu umfassen die Rahmeneckprofile 4.3.1 bis 4.3.4 der Rahmenverbindungsanordnung 4.3, die Rahmeneckprofile 4.1.5 bis 4.1.8 des ersten Rahmenabschnitts 4.1 und die Rahmeneckprofile 4.2.5 bis 4.2.8 des zweiten Rahmenabschnitts 4.2 jeweils Führungsnuten F.

Im Gegensatz zu der Türanordnung 8 sind die oberen Wandelemente 5.4, 6.4, 7.4 jeweils mittels einer ausschließlich von einer Innenseite des Sattelschranks 1 betätigbaren Befestigungsanordnung 10 an dem Aufsatzelement 3 befestigt und gesichert.

Die gleiche teleskopartige Ausbildung und Anordnung der Wandelemente 5.1 bis 5.4, 6.1 bis 6.4, 7.1 bis 7.4 und Türelemente 8.1 bis 8.4 ermöglicht einen Einsatz von vielen Gleichteilen und somit eine sehr kostengünstige Herstellung. Auch können für alle vier Ecken des Sattelschranks 1 die gleichen Rahmeneckprofile 4.3.1 bis 4.3.4 verwendet werden, woraus neben dem Kostenvorteil auch eine Vereinfachung der Montage des Sattelschranks 1 resultiert, da Verwechslungen und falsche Anordnungen unterschiedlich ausgebildeter Rahmeneckprofile 4.3.1 bis 4.3.4 sicher ausgeschlossen werden.

In nicht näher dargestellten Ausführungsbeispielen sind beliebige andere Ausführungen der Türanordnung 8 und Wandanordnungen 5 bis 7 möglich, beispielsweise Wandanordnungen 5 bis 7 mit nicht relativ zueinander bewegbaren Wandelementen 5.1 bis 5.4, 6.1 bis 6.4, 7.1 bis 7.4.

Die zwischen dem ersten Rahmenabschnitt 4.1 und dem zweiten Rahmenabschnitt 4.2 angeordneten Rahmeneckprofile 4.3.1 bis 4.3.4 und die an diesen angeordneten Wandelemente 5.2 bis 5.4, 6.2 bis 6.4, 7.2 bis 7.4 und Türelemente 8.2 bis 8.4 bilden dabei ein weiteres Aufsatzelement 15, welches zwischen dem Basiselement 2 und dem Aufsatzelement 3 angeordnet ist.

Zu einer variablen Einstellung einer Höhe des Sattelschranks 1 sind in einer möglichen Ausgestaltung verschiedene Rahmeneckprofile 4.3.1 bis 4.3.4 in unterschiedlicher Größe und/oder Menge aus einem Baukasten wählbar, um eine Höhe des Sattelschranks 1 und somit ein Volumen zur Aufnahme eines Sattels oder mehrerer Sättel sowie weiterer Gegenstände an eine jeweilige Nutzung anzupassen. Somit ist es auch möglich, mehrere weitere Aufsatzelemente 15 zwischen dem Basiselement 2 und dem Aufsatzelement 3 anzuordnen. Eine Anzahl der Wandelemente 5.2 bis 5.4, 6.2 bis 6.4, 7.2 bis 7.4 und Türelemente 8.2 bis 8.4 richtet sich dabei nach einer Länge der das zumindest eine weitere Aufsatzelement 15 bildenden Rahmeneckprofile 4.3.1 bis 4.3.4.

Auch ist es möglich, dass der Sattelschrank kein weiteres Aufsatzelement 15 umfasst, wobei hierbei zur Realisierung einer erforderlichen Höhe des Sattelschranks 1 die Rahmeneckprofile 4.1.5 bis 4.1.8, 4.2.5 bis 4.2.8 der Rahmenabschnitte 4.1, 4.2 in einer entsprechenden Länge ausgebildet sind.

Weiterhin umfasst der Sattelschrank 1 zwei an einer unteren Außenseite des Basiselements 2 angeordnete Räder 11, 12, welche in einer gekippten Position des Sattelschranks 1 eine rollende bzw. fahrende Bewegung desselben und somit einen Einsatz des Sattelschranks als so genannten Turniersattelschrank ermöglichen. Beispielsweise umfassen die Räder 11, 12 zur Erhöhung eines Komforts Luftreifen, können aber in anderen Ausführungen auch mit so genannten Vollgummireifen oder reifenlos ausgebildet sein.

Zu einer Vereinfachung des Kippens des Sattelschranks 1 ist an dessen Rückseite am Aufsatzelement 3 ein Handgriff 13 angeordnet. Der Handgriff 13 ist im dargestellten Ausführungsbeispiel stangen- bzw. relingförmig ausgebildet und somit beispielsweise zusätzlich zum Aufhängen von Gegenständen, beispielsweise zu einem Trocknen einer im Reitsport verwendeten so genannten Abschwitzdecke, eingerichtet.

In nicht näher dargestellten Ausführungsbeispielen umfasst der Sattelschrank 1 mehr als die zwei Räder 11, 12, um eine Bewegung des Sattelschranks 1 in einer aufrechten Position zu ermöglichen.

Unabhängig von der Anzahl der Räder 11, 12 kann zumindest eines der Räder 11, 12 lenkbar sein. Auch kann zumindest eines der Räder 11, 12 mit einer Bremse versehen sein.

Ferner umfasst der Sattelschrank 1 an dessen Rückseite eine am Aufsatzelement 3 angeordnete Befestigungsöse 14, welche zu einer Befestigung des Sattelschranks 1 während des Transports in einem Fahrzeug und/oder zu einer Befestigung des Sattelschranks an einem anderen beliebigen Aufstellort dient. Auch kann die Befestigungsöse 14 zu einer Diebstahlsicherung, beispielsweise durch Montage eines nicht gezeigten Vorhängeschlosses, vorgesehen sein.

Um eine Durchlüftung des Sattelschranks 1 zu realisieren, weisen mehrere der Wandelemente 5.2 bis 5.4, 6.2 bis 6.4, 7.2 bis 7.4 und Türelemente 8.2 bis 8.4 Belüftungsöffnungen O auf, welche in einer möglichen Ausgestaltung in Form eines Schriftzugs in die entsprechenden Wandelemente 5.2 bis 5.4, 6.2 bis 6.4, 7.2 bis 7.4 und Türelemente 8.2 bis 8.4 eingebracht sind.

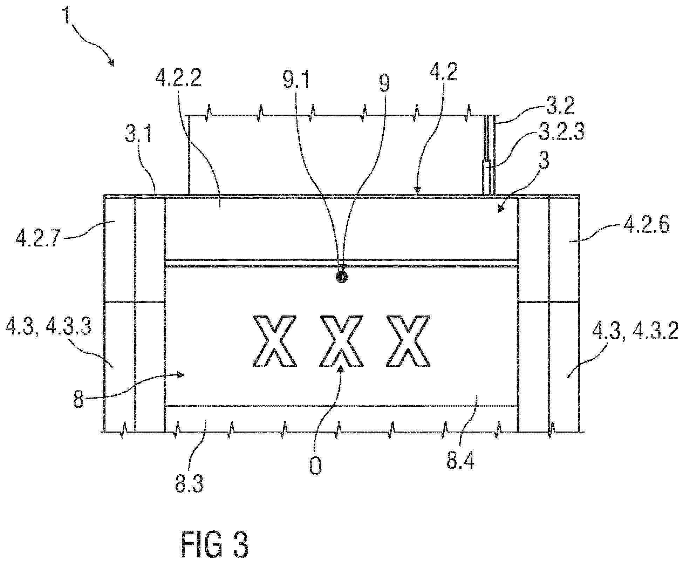

In **Figur 3** ist ein Ausschnitt einer Draufsicht einer Außenseite einer Front des Sattelschranks 1 gemäß Figur 1 im Bereich des Türschlosses 9 dargestellt. Das Türschloss 9 umfasst ein Betätigungselement 9.1, mittels welchem das Türschloss 9 von der Außenseite des Sattelschranks 1 betätigbar ist. Zu dieser Betätigung ist ein nicht näher dargestellter Schlüssel vorgesehen, welcher mit dem Betätigungselement 9.1 korrespondiert.

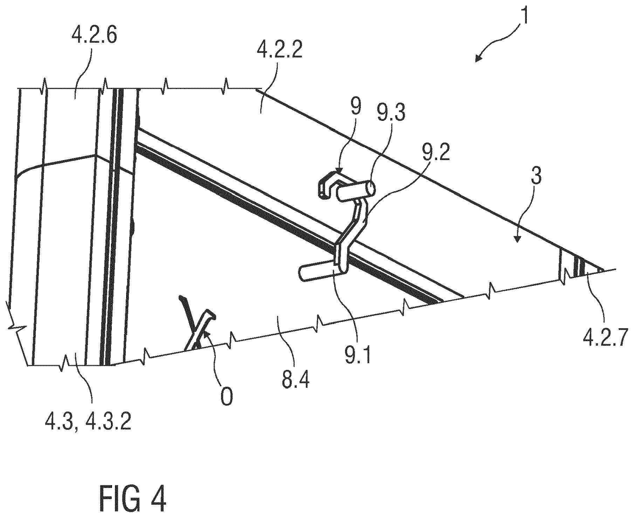

**Figur 4** zeigt einen Ausschnitt einer perspektivischen Ansicht einer Innenseite der Front des Sattelschranks 1 gemäß Figur 1 im Bereich des Türschlosses 9.

Zum Verschluss des oberen Türelements 8.4 und zur Sicherung desselben an dem Rahmenprofil 4.2.2 ist das Betätigungselement 9.1 an der Innenseite des Sattelschranks 1 mit einem Hakenelement 9.2 gekoppelt, welches im geschlossenen Zustand in mechanischem Eingriff mit einem an der Innenseite des Rahmenprofils 4.2.2 angeordneten Bolzenelement 9.3 steht. Zum Öffnen und Schließen des Türschlosses 9, d. h. zu einer Bewegung des Hakenelements 9.2 ist das Betätigungselement 9.1 mittels des Schlüssels um eine zumindest im Wesentlichen senkrecht zu einer Flachseite des oberen Türelements 8.4 verlaufende Drehachse drehbar.

**Figur 5** zeigt eine weitere Seitenansicht des Sattelschranks 1 gemäß Figur 1 mit einer abschnittsweise transparenten Darstellung im Bereich der Wandelemente 6.2, 6.3.

Im Inneren des Sattelschranks 1 ist ein Halteelement 16 mit einem Sattelhalter 16.1 zum Halten eines nicht gezeigten Sattels, auch als Sattelstütze bezeichnet, und einem so genannten Padhalter 16.2 angeordnet.

Das Halteelement 16 ist dabei mittels einer Befestigungsanordnung 17 zerstörungsfrei lösbar mit den Rahmeneckprofilen 4.3.1, 4.3.4 der Rahmenstruktur 4 gekoppelt, wobei die Befestigungsanordnung 17 beispielsweise als so genannte Hakenleiste ausgebildet ist, an welcher der Sattelhalter 16.1 und der Padhalter 16.2 zerstörungsfrei lösbar angeordnet werden können.

In einer möglichen Ausgestaltung sind die Befestigungsanordnung 17 und die Rahmeneckprofile 4.3.1, 4.3.4 derart ausgebildet, dass das Halteelement 16 in verschiedenen Höhen befestigbar ist, um Sättel mit verschiedenen Größen und/oder Typen innerhalb des Sattelschranks 1 anordnen zu können.

**Figur 6** zeigt schematisch eine weitere perspektivische Ansicht des Sattelschranks 1 gemäß Figur 1 mit demontierten Wandanordnungen 5 bis 7 und demontierter Türanordnung 8.

Die Darstellung verdeutlicht, dass die Rahmeneckprofile 4.3.1 bis 4.3.4 jeweils mit einem ersten Ende mit den Rahmeneckprofilen 4.1.5 bis 4.1.8 des ersten Rahmenanschnitts 4.1 und einem zweiten Ende mit den Rahmeneckprofilen 4.2.5 bis 4.2.8 des zweiten Rahmenanschnitts 4.2 gekoppelt sind. Zu dieser Kopplung umfassen die Rahmeneckprofile 4.3.1 bis 4.3.4 der Rahmenverbindungsanordnung 4.3 und die Rahmeneckprofile 4.1.5 bis 4.1.8, 4.2.5 bis 4.2.8 der Rahmenanschnitte 4.1, 4.2 an jeweils miteinander gekoppelten Abschnitten miteinander korrespondierende Verbindungselemente 18.1, 18.2, welche zu einer kraft- und/oder formschlüssigen Verbindung der Rahmeneckprofile 4.3.1 bis 4.3.4 mit den Rahmenabschnitten 4.1, 4.2 eingerichtet sind und im dargestellten Ausführungsbeispiel einen Spannverschluss 18 bilden.

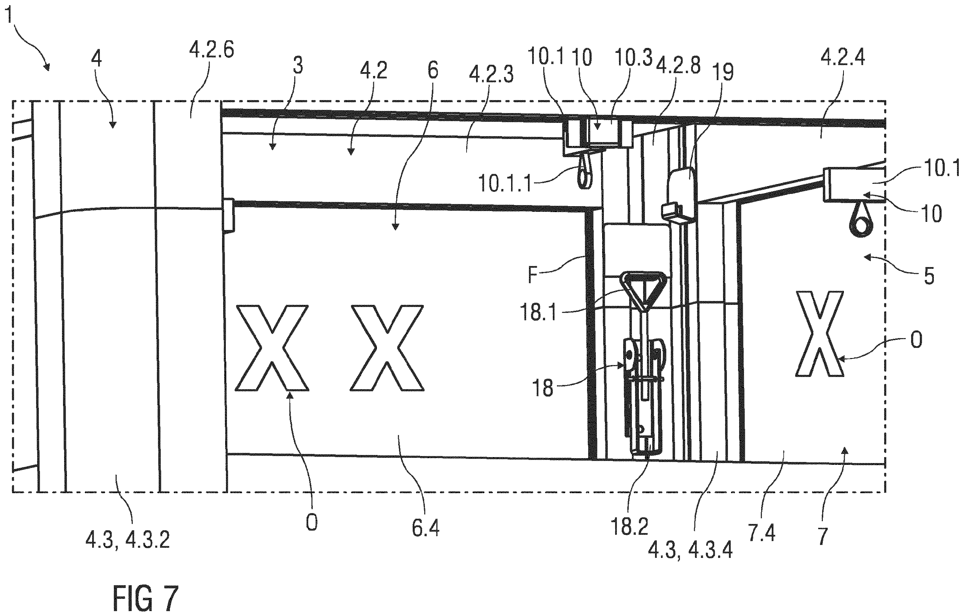

In **Figur 7** ist ein Ausschnitt einer perspektivischen Ansicht der Innenseite des Sattelschranks 1 gemäß Figur 1 dargestellt, welcher einen Spannverschluss 18 in vergrößerter Darstellung zeigt.

Weiterhin umfasst das Aufsatzelement 3 zumindest ein an dem Rahmeneckprofil 4.2.8 des zweiten Rahmenabschnitts 4.2 angeordnetes Hakenelement 19, an welchem Gegenstände, wie beispielsweise Trensen, Halfter oder Helme, aufgehängt werden können. Dabei ist das Hakenelement 19 in einer möglichen Ausgestaltung zerstörungsfrei lösbar an dem Rahmeneckprofil 4.2.5 angeordnet. In nicht näher dargestellten Ausführungsbeispielen sind mehrere Hakenelemente 19 innerhalb des Sattelschranks 1 an beliebigen Positionen an der Rahmenstruktur 4, beispielsweise in allen vier oberen Ecken an den Rahmeneckprofilen 4.2.5 bis 4.2.8 des zweiten Rahmenabschnitts 4.2, angeordnet.

Im Gegensatz zu der Türanordnung 8 sind die oberen Wandelemente 5.4, 6.4, 7.4 jeweils mittels einer ausschließlich von einer Innenseite des Sattelschranks 1 betätigbaren Befestigungsanordnung 10 an dem Aufsatzelement 3 befestigt und gesichert.

Weiterhin sind mehrere Befestigungsanordnungen 10 zur Befestigung und Sicherung der oberen Wandelemente 5.4, 6.4, 7.4 an dem Aufsatzelement 3 dargestellt.

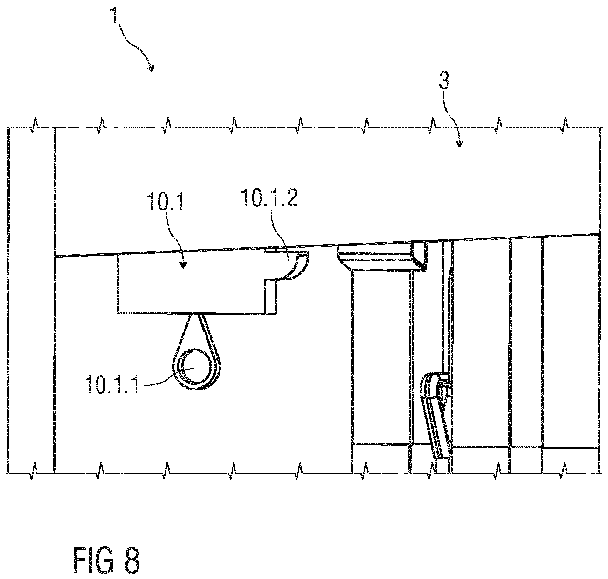

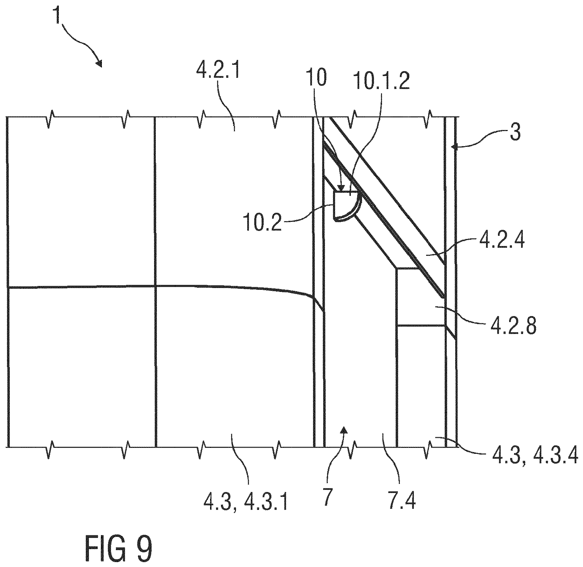

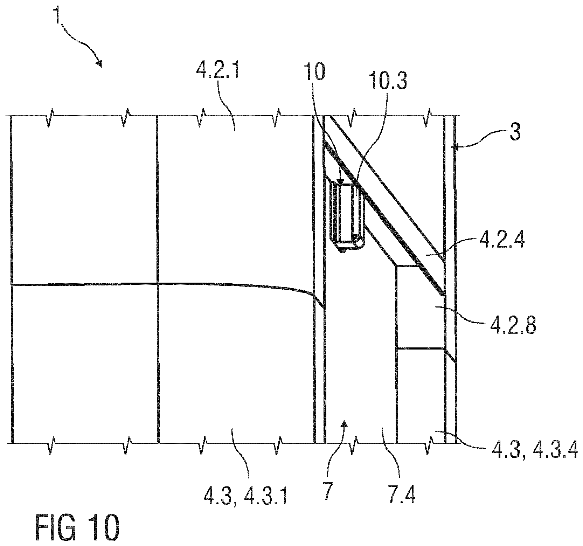

Die Befestigungsanordnungen 10 umfassen jeweils ein beispielsweise federnd gelagertes und an dem Aufsatzelement 3 befestigtes Sicherungselement 10.1, welches gemäß einer in **Figur 8** gezeigten Detaildarstellung eine Betätigungsöse 10.1.1 und eine Rastnase 10.1.2 zu einer Verrastung in einer in **Figur 9** näher dargestellten und in dem jeweiligen Wandelement 5.4, 6.4, 7.4 ausgebildeten Aussparung 10.2 umfasst. Dabei ist das Sicherungselement 10.1, d. h. die Rastnase 10.1.2, in Richtung der Aussparung 10.2 vorgespannt. An einer Außenseite des jeweiligen Wandelements 5.4, 6.4, 7.4 ist die Aussparung 10.2 mit einem in **Figur 10** gezeigten Sicherungsblech 10.3 abgedeckt, um ein Öffnen oder Zurückschieben der Rastnase 10.1.2 von außen zu verhindern.

Anhand der Figuren 7 bis 10 und der Figuren 11 bis 17 wird nachfolgend ein Zerlegen des Sattelschranks 1 und eine Überführung desselben in einen Transportzustand beschrieben.

Zunächst wird die Türanordnung 8 durch Betätigung des Türschlosses 9 geöffnet und die Türelemente 8.2 bis 8.4 werden nach unten hinter das Türelement 8.1 verschoben.

Anschließend werden durch eine freigegebene Türöffnung die Befestigungsanordnungen 10 der Wandelemente 5.4, 6.4, 7.4 geöffnet, wobei die Wandelemente 5.2 bis 5.4, 6.2 bis 6.4, 7.2 bis 7.4 ebenfalls nach unten hinter die Wandelemente 5.1, 6.1, 7.1 verschoben werden.

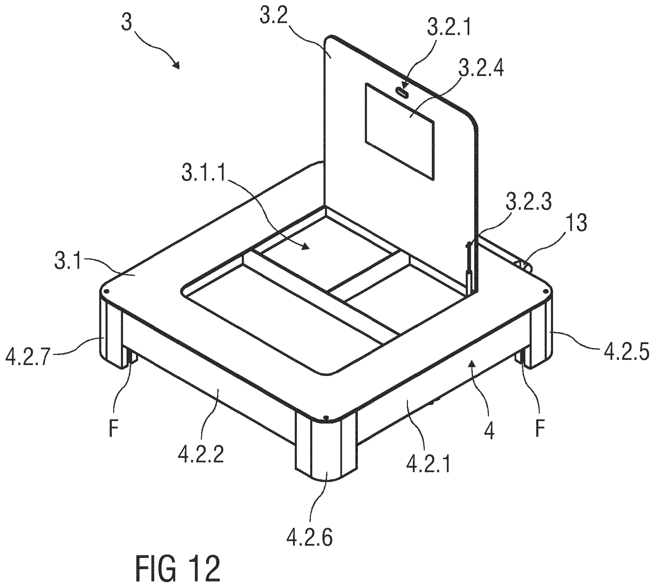

Anschließend werden die Spannverschlüsse 18 zwischen den Rahmeneckprofilen 4.3.1 bis 4.3.4 der Rahmenverbindungsanordnung 4.3 und den Rahmeneckprofilen 4.2.5 bis 4.2.8 des zweiten Rahmenanschnitts 4.2 geöffnet und das Aufsatzelement 3 wird nach oben abgenommen. Das Aufsatzelement 3 ist im abgenommenen Zustand in den **Figuren 11** **und** **12** näher dargestellt.

Nach der Abnahme des Deckels 3.2 befindet sich der Sattelschrank 1 in einem in **Figur 13** dargestellten Zustand, wobei in Figur 13 ersichtlich ist, dass die Rahmeneckprofile 4.3.1 bis 4.3.4 der Rahmenverbindungsanordnung 4.3 an ihrem zweiten Ende jeweils drei stiftförmige Verbindungselemente 20 umfassen, welche zu einer kraft- und/oder formschlüssigen Verbindung der Rahmeneckprofile 4.3.1 bis 4.3.4 mit dem zweiten Rahmenabschnitt 4.2 ausgebildet sind und eine verdrehsichere Anordnung in genau einer relativen Position des jeweiligen Rahmeneckprofils 4.3.1 bis 4.3.4 zu dem zweiten Rahmenabschnitt 4.2 ermöglichen. Zu diesem Zweck greifen die stiftförmigen Verbindungselemente 20 in nicht näher dargestellte korrespondierende Aussparungen der Rahmeneckprofile 4.2.5 bis 4.2.8 des zweiten Rahmenabschnitts 4.2 ein.

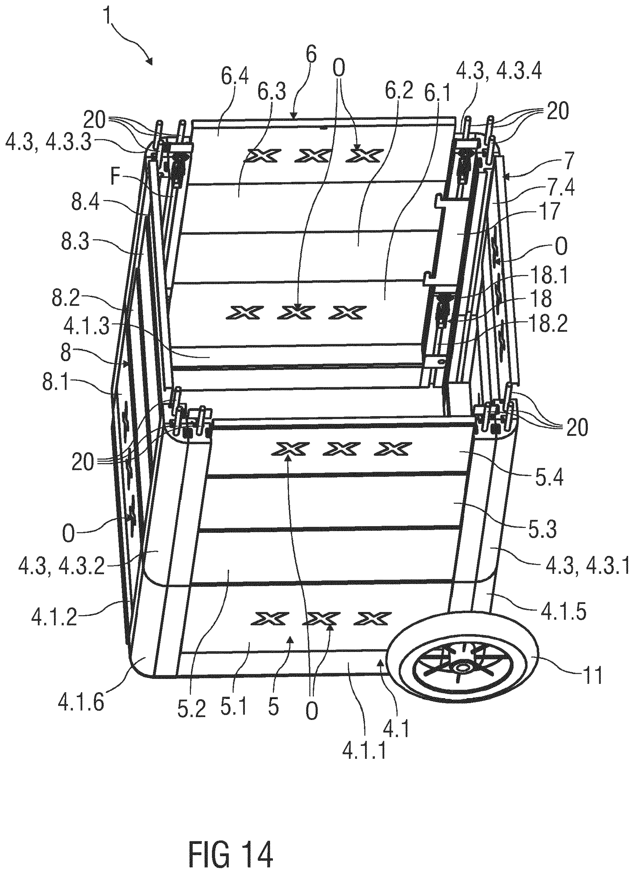

Anschließend wird das Halteelement 16 von der Befestigungsanordnung 17 gelöst und aus dem Sattelschrank 1 entnommen. Hiernach befindet sich der Sattelschrank 1 in einem in **Figur 14** dargestellten Zustand.

Anschließend werden die Rahmeneckprofile 4.3.1 bis 4.3.4 von dem Basiselement 2 gelöst, wobei zuvor jeweils die Rahmeneckprofile 4.3.1 bis 4.3.4 der Rahmenverbindungsanordnung 4.3 mit den Rahmeneckprofilen 4.1.5 bis 4.1.8 der ersten Rahmenstruktur 4.1 verbindende Spannverschlüsse 18 geöffnet werden.

Weiterhin ist es auch möglich, dass die Räder 11, 12 vom Basiselement 2 demontiert werden.

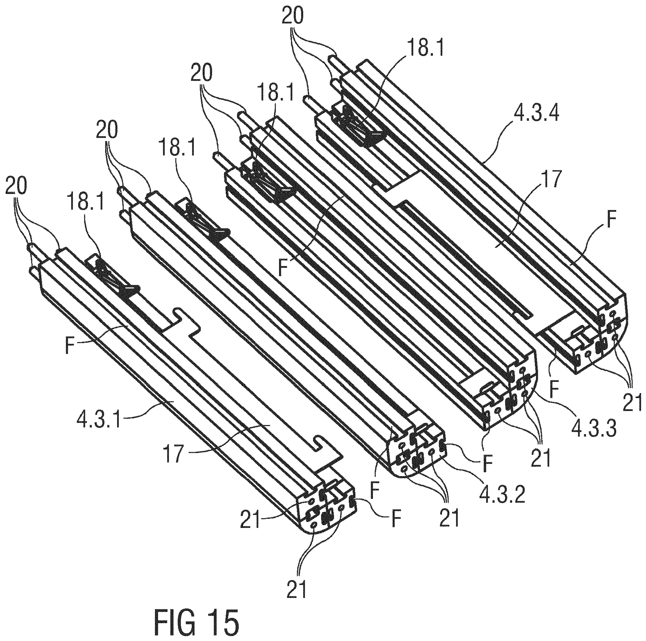

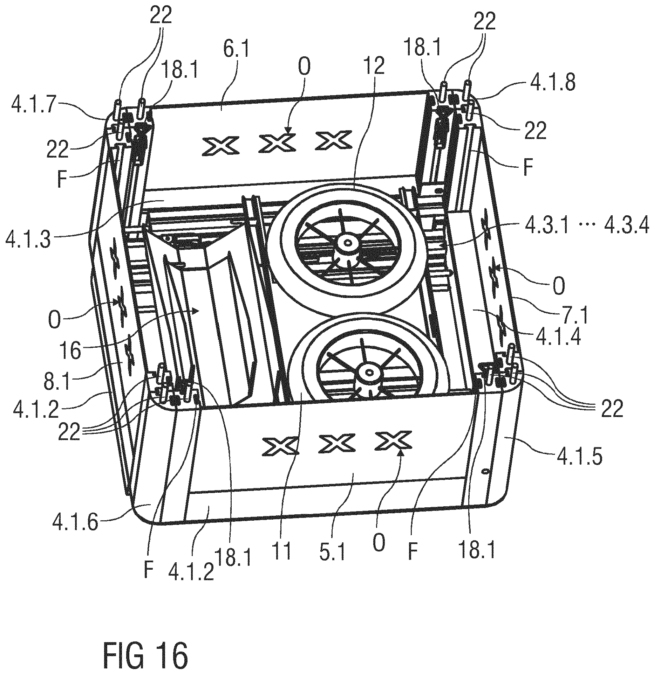

Die gelösten Rahmeneckprofile 4.3.1 bis 4.3.4 sind in **Figur 15** gezeigt, wobei in Figur 15 ersichtlich ist, dass die Rahmeneckprofile 4.3.1 bis 4.3.4 der Rahmenverbindungsanordnung 4.3 an ihrem ersten Ende jeweils drei als Aussparungen ausgebildeten Verbindungselemente 21 umfassen, welche zu einer kraft- und/oder formschlüssigen Verbindung der Rahmeneckprofile 4.3.1 bis 4.3.4 mit dem ersten Rahmenabschnitt 4.1 ausgebildet sind und eine verdrehsichere Anordnung in genau einer relativen Position des jeweiligen Rahmeneckprofils 4.3.1 bis 4.3.4 zu dem ersten Rahmenabschnitt 4.1 ermöglichen. Zu diesem Zweck greifen in Figur 16 näher dargestellte korrespondierende stiftförmige Verbindungselemente 22 der Rahmeneckprofile 4.1.5 bis 4.1.8 des ersten Rahmenanschnitts 4.1 in die Verbindungselemente 21 ein.

Nach einer Demontage der Rahmeneckprofile 4.3.1 bis 4.3.4 und der Räder 11, 12 werden diese in einer möglichen Ausgestaltung gemeinsam mit dem Haltelement 16 und den Rahmeneckprofilen 4.3.1 bis 4.3.4 in dem Basiselement 2 verstaut, wie in **Figur 16** näher dargestellt ist. Um dies zu ermöglichen, sind Abmessungen der Rahmeneckprofile 4.3.1 bis 4.3.4, der Räder 11, 12 und des Haltelements 16 kleiner als Abmessungen einer freien Fläche des Bodenabschnitts 2.1.

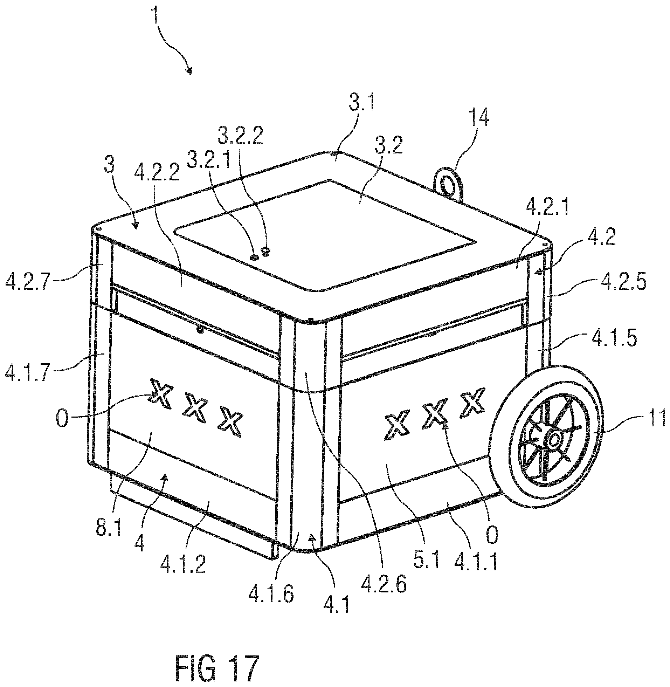

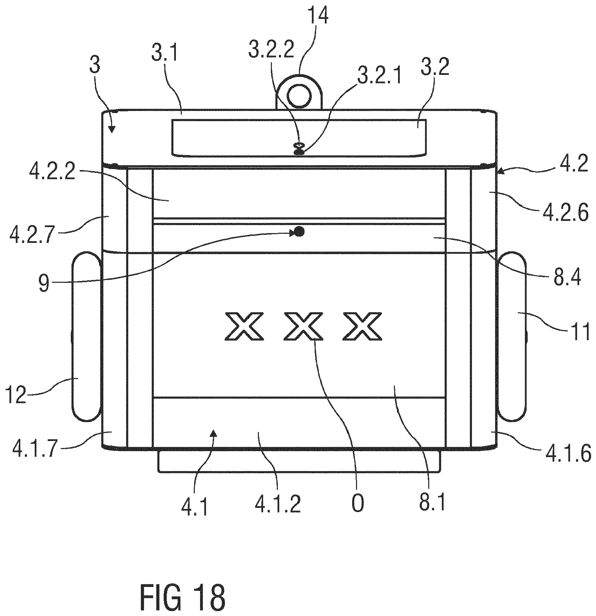

Anschließend wird das Aufsatzelement 3 auf den Rahmeneckprofilen 4.1.5 bis 4.1.8 des ersten Rahmenanschnitts 4.1, insbesondere an den Verbindungselementen 22, befestigt. Den Sattelschrank 1 in diesem Zustand, jedoch mit montierten Rädern 11, 12, zeigen die **Figuren 17** **und** **18****.**

Hierbei weist der Sattelschrank 1 beispielsweise eine Höhe von 550 mm auf, wobei beispielsweise eine Höhe des Basiselements 2 350 mm beträgt, eine Höhe des Aufsatzelements 3 150 mm und eine Höhe der Räder 11, 12 unterhalb des Basiselements 2 50 mm beträgt.

Ein Demontage des Sattelschranks 1 bzw. eine Überführung des Sattelschranks 1 von dem in den Figuren 1 und 2 dargestellten vollständig montierten Zustand in den in den Figuren 17 und 18 dargestellten Transportzustand dauert in einer möglichen Ausgestaltung nicht länger als eine Minute.

Die Montage des Sattelschranks 1 bzw. eine Überführung des Sattelschranks 1 von dem in den Figuren 17 und 18 dargestellten Transportzustand in den in den Figuren 17 und 18 vollständig montierten Zustand erfolgt in umgekehrter Reihenfolge und erfordert ebenso einen Zeitaufwand von nicht mehr als einer Minute.

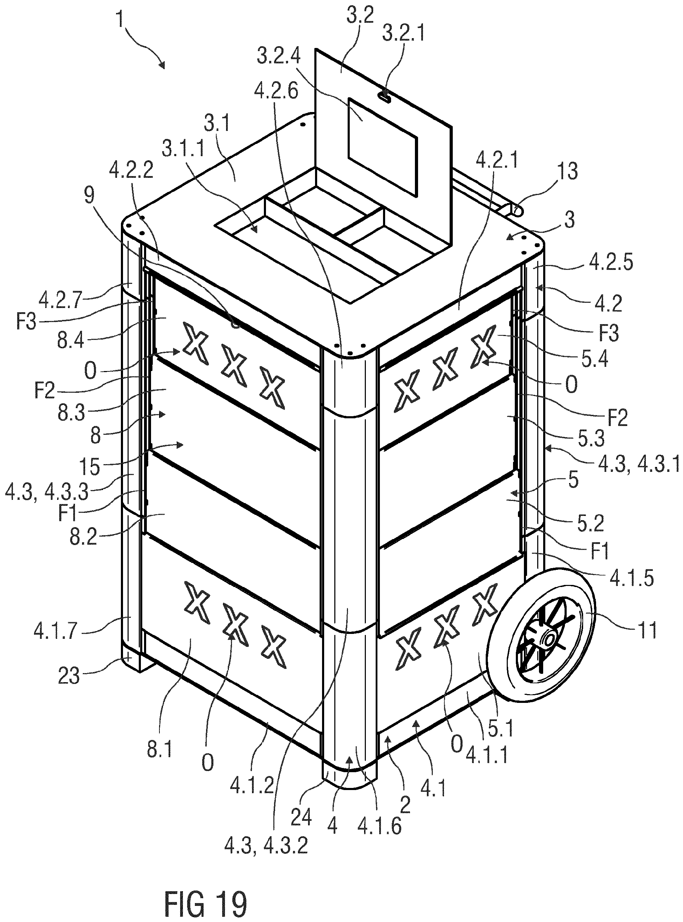

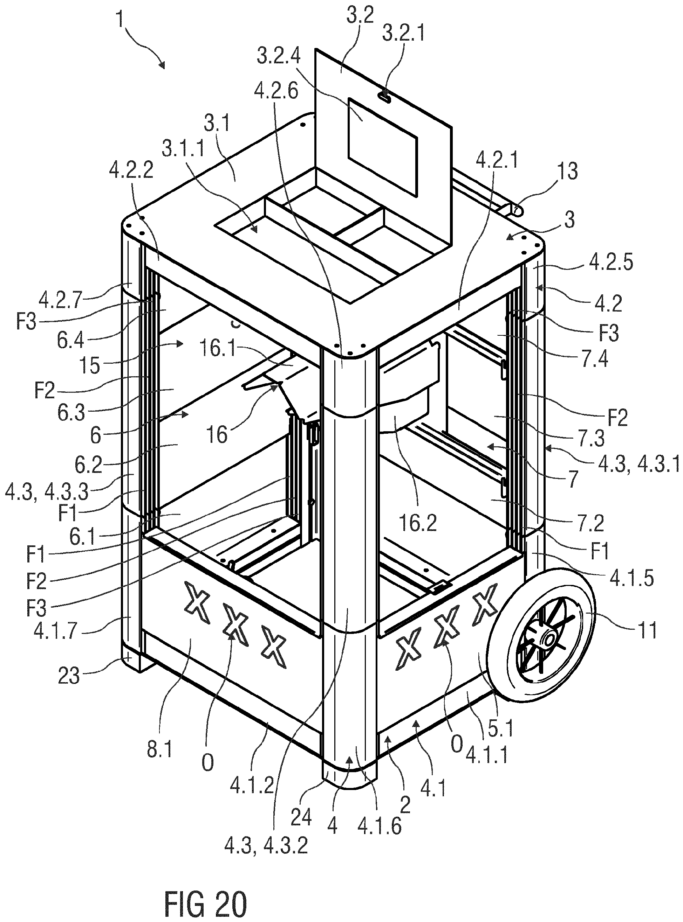

In **Figur 19** ist eine perspektivische Ansicht eines möglichen weiteren Ausführungsbeispiels eines Sattelschranks 1 dargestellt. **Figur 20** zeigt dieses Ausführungsbeispiel des Sattelschranks 1 mit einer geöffneten Wandanordnung 5 und einer geöffneten Türanordnung 8.

Der Sattelschrank 1 unterscheidet sich von dem in den Figuren 1 bis 18 dargestellten Ausführungsbeispiel des Sattelschranks 1 dadurch, dass die Rahmeneckprofile 4.1.5 bis 4.1.8 des ersten Rahmenanschnitts 4.1, die Rahmeneckprofile 4.2.5 bis 4.2.8 des zweiten Rahmenanschnitts 4.2 und die Rahmeneckprofile 4.3.1 bis 4.3.4 der Rahmenverbindungsanordnung 4.3 jeweils drei parallel verlaufende Führungsnuten F1 bis F3 aufweisen, in welchen die Türelemente 8.2 bis 8.4 und die Wandelemente 5.2 bis 5.4, 6.2 bis 6.4, 7.2 bis 7.4 teleskopartig miteinander verbunden und zueinander verschiebbar sind.

Dabei ist das untere Türelement 8.1 unbeweglich an den Rahmeneckprofilen 4.1.6, 4.1.7 angeordnet und oberhalb des unteren Türelements 8.1 angeordnete Türelemente 8.2 bis 8.4 sind beweglich, insbesondere in vertikaler Richtung verschiebbar, an den Rahmeneckprofilen 4.3.2, 4.3.3 und den Rahmeneckprofilen 4.2.6, 4.2.7 des zweiten Rahmenabschnitts 4.2 angeordnet, wobei jeweils ein Türelement 8.2 bis 8.4 in einer Führungsnut F1 bis F3 angeordnet ist.

Weiterhin sind auch die jeweils unteren Wandelemente 5.1, 6.1, 7.1 unbeweglich an den zugehörigen Rahmeneckprofilen 4.1.5 bis 4.1.8 angeordnet sind. Jeweils oberhalb der unteren Wandelemente 5.1, 6.1, 7.1 angeordnete Wandelemente 5.2 bis 5.4, 6.2 bis 6.4, 7.2 bis 7.4 sind beweglich, insbesondere in vertikaler Richtung verschiebbar, an den Rahmeneckprofilen 4.3.1 bis 4.3.4 der Rahmenverbindungsanordnung 4.3 und an den Rahmeneckprofilen 4.2.5 bis 4.2.8 des zweiten Rahmenabschnitts 4.2 angeordnet, wobei jeweils ein Wandelement 5.2 bis 5.4, 6.2 bis 6.4, 7.2 bis 7.4 in einer Führungsnut F1 bis F3 angeordnet ist.

Weiterhin unterscheidet sich der dargestellte Sattelschrank 1 von dem in den Figuren 1 bis 18 dargestellten Ausführungsbeispiel des Sattelschranks 1 dadurch, dass dieser an seiner den Rädern 11, 12 abgewandten Vorderseite zwei Stützelemente 23, 24, auch als Füße bezeichnet, aufweist, welche unterhalb der Rahmeneckprofile 4.1.6, 4.1.7 des ersten Rahmenabschnitts 4.1 angeordnet sind.

Weiterhin unterscheidet sich der dargestellte Sattelschrank 1 von dem in den Figuren 1 bis 18 dargestellten Ausführungsbeispiel des Sattelschranks 1 dadurch, dass der den Deckel 3.2 und den Deckenabschnitt 3.1 koppelnde Klappendämpfer 3.2.3, welcher einen Öffnungsvorgang des Deckels 3.2 unterstützt und den Deckel 3.2 in der geöffneten Position hält, in nicht näher dargestellter Weise in eine Drehachse des Deckels 3.2 integriert ist.

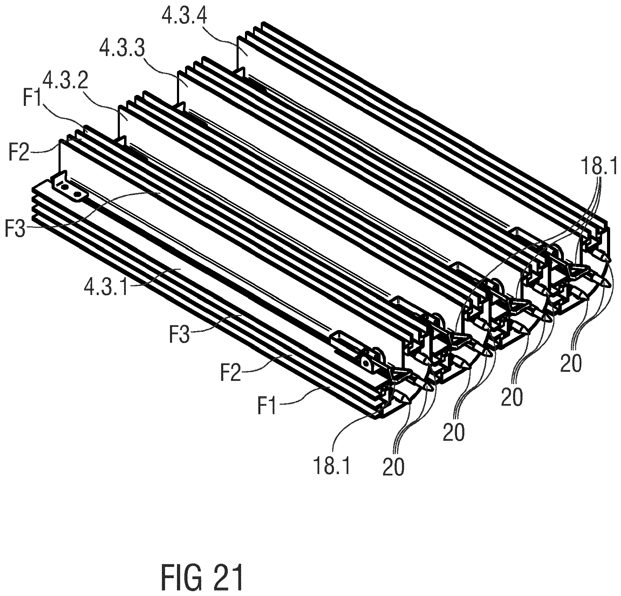

In **Figur 21** ist eine perspektivische Ansicht der gelösten, d. h. demontierten Rahmeneckprofile 4.3.1 bis 4.3.4 des Sattelschranks 1 gemäß dem in den Figuren 19 und 20 dargestellten Ausführungsbeispiels gezeigt. Zur Wahrung der Übersichtlichkeit sind nur an einem Rahmeneckprofil 4.3.1 die Führungsnuten F1 bis F3 mit Bezugszeichen gekennzeichnet. Es verfügt jedoch jedes Rahmeneckprofil 4.3.1 bis 4.3.4 jeweils über zwei Gruppen von Führungsnuten F1 bis F3.

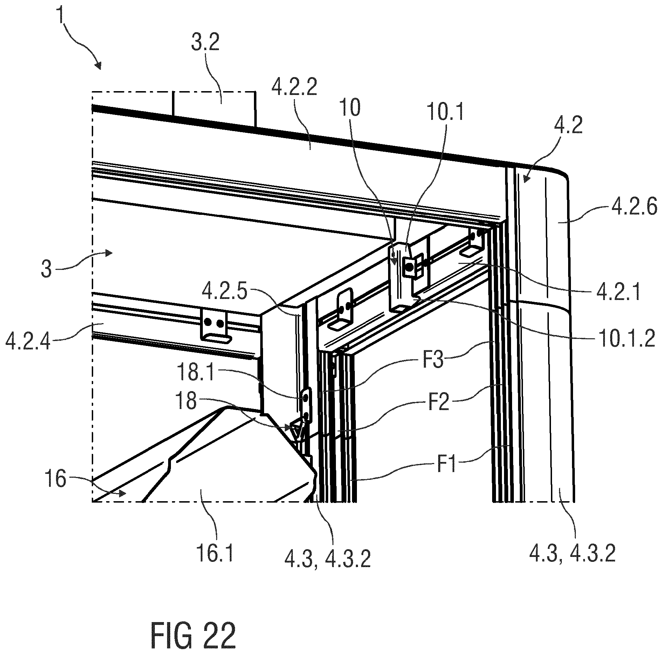

**Figur 22** zeigt einen Ausschnitt einer perspektivischen Ansicht einer Innenseite des Sattelschranks 1 gemäß Figur 19.

Im Unterschied zu dem in den Figuren 1 bis 18 dargestellten Ausführungsbeispiel des Sattelschranks 1 weisen die Befestigungsanordnungen 10 des Sattelschranks 1 im vorliegenden Ausführungsbeispiel ein federnd gelagertes und an dem Aufsatzelement 3 befestigtes Sicherungselement 10.1, welches als Hakenelement ausgebildet ist und eine Rastnase 10.1.2 zu einer Verrastung in einer nicht näher dargestellten und in dem jeweiligen Wandelement 5.4, 6.4, 7.4 ausgebildeten Aussparung 10.2 oder einer anderen an den Wandelementen 5.4, 6.4, 7.4 ausgebildeten geeigneten Befestigungsstruktur umfasst. Dabei ist das Sicherungselement 10.1, d. h. die Rastnase 10.1.2, in Richtung der Aussparung 10.2 oder Befestigungsstruktur vorgespannt.

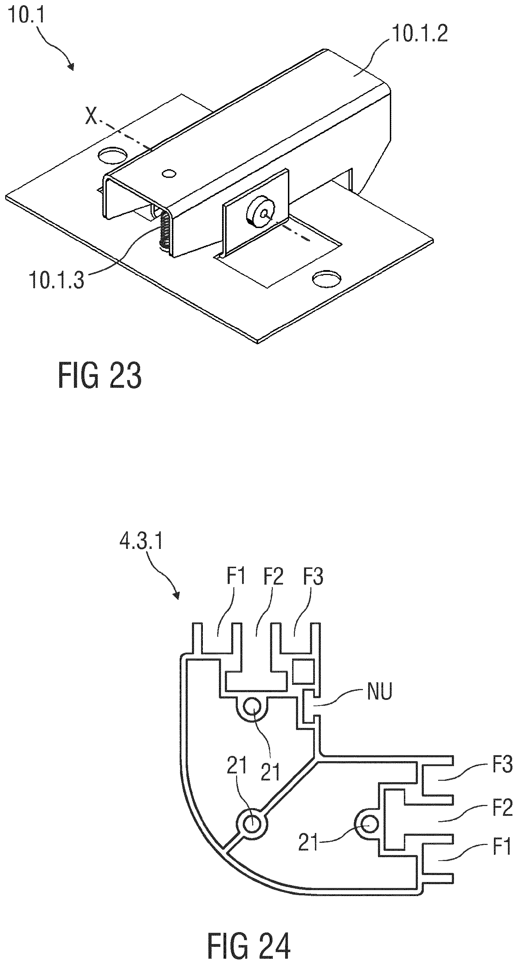

**Figur 23** zeigt eine perspektivische Detaildarstellung des Sicherungselements 10.1 gemäß Figur 22, wobei zur Vorspannung des Sicherungselements 10.1, d. h. der Rastnase 10.1.2, in Richtung der Aussparung 10.2 bzw. der Befestigungsstruktur eine Spiraldruckfeder 10.1.3 vorgesehen ist. Die Rastnase 10.1.2 ist dabei um eine Schwenkachse X schwenkbar.

In **Figur 24** ist eine Draufsicht einer Querschnittsfläche eines Rahmeneckprofils 4.3.1 des Sattelschranks 1 gemäß Figur 19 dargestellt, wobei die unteren Querschnittsflächen der weiteren Rahmeneckprofile 4.3.2 bis 4.3.4 der Rahmenverbindungsanordnung 4.3 und der Rahmeneckprofile 4.2.5 bis 4.2.8 des zweiten Rahmenabschnitts 4.2 identisch zur dargestellten Querschnittsfläche ausgebildet sind.

An der Seite der dargestellten Querschnittsfläche sind drei als Aussparungen ausgebildete Verbindungselemente 21 angeordnet, welche in ihrer Anordnung und ihrer Form mit den stiftförmigen Verbindungselementen 22 der Rahmeneckprofile 4.1.5 bis 4.1.8 des ersten Rahmenabschnitts 4.1 korrespondieren. Die oberen Querschnittsflächen der Rahmeneckprofile 4.1.5 bis 4.1.8 des ersten Rahmenabschnitts 4.1 unterscheiden sich von der dargestellten Querschnittsfläche dadurch, dass anstatt der als Aussparungen ausgebildeten Verbindungselemente 21 die stiftförmigen Verbindungselemente 22 vorgesehen sind, welche zu einem Eingriff in die Verbindungselemente 21 ausgebildet sind.

Weiterhin umfassen alle Rahmeneckprofile 4.1.5 bis 4.1.8, 4.2.5 bis 4.2.8, 4.3.1 bis 4.3.4 jeweils an ihrer Innenseite eine Nut NU zur Befestigung der Spannverschlüsse 18 sowie von Hakenelementen 19 oder anderen Elementen.

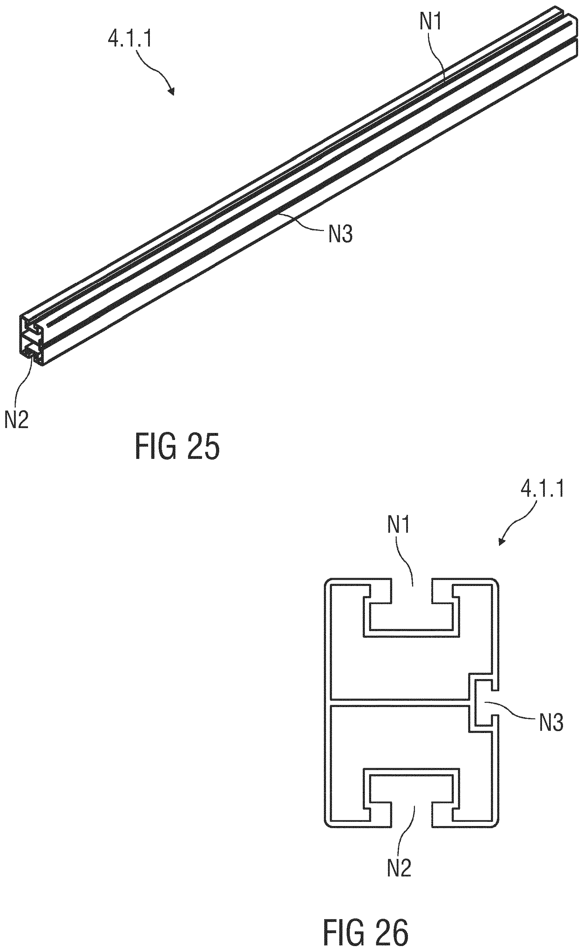

**Figur 25** zeigt eine perspektivische Ansicht eines Rahmenprofils 4.1.1 des ersten Rahmenabschnitts 4.1 des Sattelschranks 1 gemäß Figur 19. In **Figur 26** ist eine Draufsicht einer Querschnittsfläche des Rahmenprofils 4.1.1 gemäß Figur 24 dargestellt. Die weiteren Rahmenprofile 4.1.2 bis 4.1.4 des ersten Rahmenabschnitts 4.1 sowie die Rahmenprofile 4.2.1 bis 4.2.4 des zweiten Rahmenabschnitts 4.2 sind identisch ausgebildet.

Das Rahmenprofil 4.1.1 weist an seiner Oberseite und seiner Unterseite jeweils eine in Längsausrichtung des Rahmenprofils 4.1.1 verlaufende Nut N1, N2 auf. Diese Nuten N1, N2 sind zur Befestigung an den zugehörigen Rahmeneckprofilen 4.1.5 bis 4.1.8, 4.2.5 bis 4.2.8 ausgebildet, wobei an den Rahmeneckprofilen 4.1.5 bis 4.1.8, 4.2.5 bis 4.2.8 zu den Nuten N1, N2 korrespondierende Befestigungselemente angeordnet sind, welche zum Einführen in die Nuten N1, N2 ausgebildet sind.

Das Rahmenprofil 4.1.1 weist weiterhin an einer im Wesentlichen rechtwinklig zur Ober- und Unterseite verlaufenden Seite eine weitere Nut N3 auf. Das Rahmenprofil 4.1.1 wird insbesondere derart montiert, dass diese Seite mit der Nut N3 in Richtung des Inneren des Sattelschranks 1 weist. Die Nut N3 ist dabei beispielsweise zur Befestigung des Bolzenelements 9.3 des Türschlosses 9, zumindest eines Sicherungselements 10.1 einer Befestigungsanordnungen 10, von Hakenelementen 19 und/oder anderen Elementen ausgebildet.

### BEZUGSZEICHENLISTE

- 1: Sattel schrank
- 2: Basiselement
- 2.1: Bodenabschnitt
- 3: Aufsatzelement
- 3.1: Deckenabschnitt
- 3.1.1: Raum
- 3.2: Deckel
- 3.2.1: Deckelschloss
- 3.2.2: Deckelgriff
- 3.2.3: Klappendämpfer
- 3.2.4: Spiegel
- 4: Rahmenstruktur
- 4.1: erster Rahmenabschnitt
- 4.1.1 bis 4.1.4: Rahmenprofil
- 4.1.5 bis 4.1.8: Rahmeneckprofil
- 4.2: zweiter Rahmenabschnitt
- 4.2.1 bis 4.2.4: Rahmenprofil
- 4.2.5 bis 4.2.8: Rahmeneckprofil
- 4.3: Rahmenverbindungsanordnung
- 4.3.1 bis 4.3.4: Rahmeneckprofil
- 5: Wandanordnung
- 5.1 bis 5.4: Wandelement
- 6: Wandanordnung
- 6.1 bis 6.4: Wandelement
- 7: Wandanordnung
- 7.1 bis 7.4: Wandelement
- 8: Türanordnung
- 8.1 bis 8.4: Türelement
- 9: Türschloss
- 9.1: Betätigungselement
- 9.2: Hakenelement
- 9.3: Bolzenelement
- 10: Befestigungsanordnung
- 10.1: Sicherungselement
- 10.1.1: Betätigungsöse
- 10.1.2: Rastnase
- 10.1.3: Spiraldruckfeder
- 10.2: Aussparung
- 10.3: Sicherungsblech
- 11, 12: Rad
- 13: Handgriff
- 14: Befestigungsöse
- 15: Aufsatzelement
- 16: Halteelement
- 16.1: Sattelhalter
- 16.2: Padhalter
- 17: Befestigungsanordnung
- 18: Spannverschluss
- 18.1, 18.2: Verbindungselement
- 19: Hakenelement
- 20 bis 22: Verbindungselement
- 23, 24: Stützelement
- F: Führungsnut
- F1 bis F3: Führungsnut
- N1 bis N3: Nut
- NU: Nut
- O: Belüftungsöffnung
- X: Schwenkachse

## Patentansprüche

1. Sattelschrank (1), umfassend
- ein Basiselement (2) mit einem Bodenabschnitt (2.1),
- ein Aufsatzelement (3) mit einem Deckenabschnitt (3.1) und eine
- Rahmenstruktur (4) mit
- einem ersten Rahmenabschnitt (4.1), welcher mit dem Basiselement (2) verbunden ist,
- einem zweiten Rahmenabschnitt (4.2), welcher mit dem Aufsatzelement (3) verbunden ist, und
- einer Rahmenverbindungsanordnung (4.3), welche eingerichtet ist, den ersten Rahmenabschnitt (4.1) und den zweiten Rahmenabschnitt (4.2) zerstörungsfrei lösbar miteinander zu verbinden, wobei die Rahmenverbindungsanordnung (4.3) mehrere Rahmeneckprofile (4.3.1 bis 4.3.4) umfasst, welche zwischen dem ersten Rahmenabschnitt (4.1) und dem zweiten Rahmenabschnitt (4.2) anordbar sind,
- zumindest eine Wandanordnung (5 bis 7) und/oder zumindest eine Türanordnung (8), welche zwischen zwei benachbart angeordneten Rahmeneckprofilen (4.3.1 bis 4.3.4) angeordnet oder anordbar sind bzw. ist,
wobei
- die Rahmeneckprofile (4.3.1 bis 4.3.4) jeweils zumindest eine Führungsnut (F1 bis F3) umfassende Befestigungsstrukturen zur Befestigung der zumindest einen Wandanordnung (5 bis 7) und/oder zumindest einen Türanordnung (8) umfassen und
- die Befestigungsstrukturen derart ausgebildet sind, dass die Wandanordnung und/oder Türanordnung innerhalb dieser verschiebbar anordbar sind bzw. ist,
und der Sattelschrank umfassend zumindest ein Halteelement (16) und/oder zumindest ein Aufnahmeelement zum Halten bzw. zur Aufnahme eines Sattels, und gegebenenfalls von Gegenständen einer Reitausrüstung und/oder gegebenenfalls von Zubehörgegenständen, wobei das zumindest eine Halteelement (16) und/oder das zumindest eine Aufnahmeelement zerstörungsfrei lösbar mit der Rahmenstruktur (4) gekoppelt sind bzw. ist.

2. Sattelschrank (1) nach Anspruch 1,
**dadurch gekennzeichnet, dass** die Rahmeneckprofile (4.3.1 bis 4.3.4)
- jeweils mit einem ersten Ende mit dem ersten Rahmenabschnitt (4.1) und einem zweiten Ende mit dem zweiten Rahmenabschnitt (4.2) gekoppelt sind und
- an jeweils miteinander gekoppelten Abschnitten miteinander korrespondierende Verbindungselemente (18.1, 18.2, 20 bis 22) umfassen, welche zu einer kraft- und/oder formschlüssigen Verbindung der Rahmeneckprofile (4.3.1 bis 4.3.4) mit dem ersten Rahmenabschnitt (4.1) und dem zweiten Rahmenabschnitt (4.2) eingerichtet sind.

3. Sattelschrank (1) nach Anspruch 2,
**dadurch gekennzeichnet, dass** miteinander korrespondierende Verbindungselemente (18.1, 18.2) Bestandteil eines Spannverschlusses (18) sind.

4. Sattelschrank (1) nach einem der vorhergehenden Ansprüche,
**dadurch gekennzeichnet, dass** Abmessungen der
Rahmeneckprofile (4.3.1 bis 4.3.4) kleiner sind als Abmessungen einer freien Fläche des Bodenabschnitts (2.1).

5. Sattelschrank (1) nach einem der vorhergehenden Ansprüche,
**dadurch gekennzeichnet, dass**
- die zumindest eine Wandanordnung (5 bis 7) mehrere plattenförmige Wandelemente (5.1 bis 5.4, 6.1 bis 6.4, 7.1 bis 7.4) umfasst und/oder
- die zumindest eine Türanordnung (8) mehrere plattenförmige Türelemente (8.1 bis 8.4) umfasst.

6. Sattelschrank (1) nach Anspruch 5,
**dadurch gekennzeichnet, dass**
- die Wandelemente (5.1 bis 5.4, 6.1 bis 6.4, 7.1 bis 7.4) relativ zueinander beweglich sind und/oder
- die Türelemente (8.1 bis 8.4) relativ zueinander beweglich sind.

7. Sattelschrank (1) nach einem der vorhergehenden Ansprüche,
**dadurch gekennzeichnet, dass** an einer Außenseite des Basiselements (2) eine Anzahl von Rädern (11, 12) angeordnet ist.

## Claims

1. Saddle cabinet (1) comprising
- a base element (2) with a floor portion (2.1),
- an attachment element (3) with a ceiling portion (3.1), and
- a frame structure (4)
- with a first frame portion (4.1), which is connected to the base element (2),
- with a second frame portion (4.2), which is connected to the attachment element (3), and
- with a frame-connecting arrangement (4.3), which is configured to connect the first frame portion (4.1) and the second frame portion (4.2) to one another such that they are releasable in a non-destructive manner, wherein the frame-connecting arrangement (4.3) comprises a plurality of frame-corner profiles (4.3.1 to 4.3.4), which are arrangeable between the first frame portion (4.1) and the second frame portion (4.2),
- at least one wall arrangement (5 to 7) and/or at least one door arrangement (8), which are/is arranged or arrangeable between two adjacent frame-corner profiles (4.3.1 to 4.3.4),
wherein
- the frame-corner profiles (4.3.1 to 4.3.4) comprise fastening structures which each comprise at least one guide groove (F1 to F3) and are intended for fastening the at least one wall arrangement (5 to 7) and/or at least one door arrangement (8), and
- the fastening structures are designed such that the wall arrangement and/or door arrangement are/is arrangeable in a displaceable manner within the same, and the saddle cabinet comprising at least one retaining element (16) and/or at least one receiving element for retaining and/or for receiving a saddle, and possibly items of riding equipment and/or possibly accessories, wherein the at least one retaining element (16) or the at least one receiving element are/is coupled to the frame structure (4) such that they are releasable in a non-destructive manner.

2. Saddle cabinet (1) according to Claim 1,
**characterized in that** the frame-corner profiles (4.3.1 to 4.3.4)
- each have a first end coupled to the first frame portion (4.1) and a second end coupled to the second frame portion (4.2), and
- comprise mutually corresponding connecting elements (18.1, 18.2, 20 to 22) on portions which are coupled to one another in each case, said connecting elements being configured for force-fitting and/or form-fitting connection of the frame-corner profiles (4.3.1 to 4.3.4) to the first frame portion (4.1) and the second frame portion (4.2).

3. Saddle cabinet (1) according to Claim 2,
**characterized in that** mutually corresponding connecting elements (18.1, 18.2) are a constituent part of a toggle fastener (18).

4. Saddle cabinet (1) according to one of the preceding claims,
**characterized in that** dimensions of the frame-corner profiles (4.3.1 to 4.3.4) are smaller than dimensions of a free surface area of the floor portion (2.1).

5. Saddle cabinet (1) according to one of the preceding claims,
**characterized in that**
- the at least one wall arrangement (5 to 7) comprises a plurality of panel-form wall elements (5.1 to 5.4, 6.1 to 6.4, 7.1 to 7.4), and/or
- the at least one door arrangement (8) comprises a plurality of panel-form door elements (8.1 to 8.4).

6. Saddle cabinet (1) according to Claim 5,
**characterized in that**
- the wall elements (5.1 to 5.4, 6.1 to 6.4, 7.1 to 7.4) are movable relative to one another, and/or
- the door elements (8.1 to 8.4) are movable relative to one another.

7. Saddle cabinet (1) according to one of the preceding claims,
**characterized in that** a number of wheels (11, 12) are arranged on an outer side of the base element (2).

## Revendications

1. Coffret de sellerie (1), comprenant
- un élément de base (2) pourvu d'une portion inférieure (2.1),
- un élément de rehaussement (3) pourvu d'une portion de plafond (3.1) et
- une structure de cadre (4) pourvue
- d'une première portion de cadre (4.1) qui est relié à l'élément de base (2),
- d'une deuxième portion de cadre (4.2) qui est reliée à l'élément de rehaussement (3), et
- d'un ensemble de liaison de cadre (4.3) qui est conçu pour relier la première portion de cadre (4.1) et la deuxième portion de cadre (4.2) l'une à l'autre de manière amovible et non destructive, l'ensemble de liaison de cadre (4.3) comprenant plusieurs profilés d'angle de cadre (4.3.1 à 4.3.4) qui peuvent être disposés entre la première portion de cadre (4.1) et la deuxième portion de cadre (4.2),
- au moins un ensemble de paroi (5 à 7) et/ou au moins un ensemble de porte (8) qui sont ou peuvent être disposés entre deux profilés d'angle de cadre (4.3.1 à 4.3.4) adjacents,
- les profilés d'angle de cadre (4.3.1 à 4.3.4) comprenant des structures de fixation comprenant chacune au moins une rainure de guidage (F1 à F3) et destinées à la fixation de l'au moins un ensemble de paroi (5 à 7) et/ou de l'au moins un ensemble de porte (8) et
- les structures de fixation étant conçues de telle manière que l'ensemble de paroi et/ou l'ensemble de porte soient ou puissent être disposés de manière déplaçable à l'intérieur de celles-ci,
et le coffret de sellerie comprenant au moins un élément de retenue (16) et/ou au moins un élément de réception destiné à maintenir ou recevoir une selle, et éventuellement des objets d'un équipement d'équitation et/ou, le cas échéant, des accessoires, l'au moins un élément de retenue (16) et/ou l'au moins un élément de réception étant accouplés de manière amovible et non destructive à la structure de cadre (4).

2. Coffret de sellerie (1) selon la revendication 1,
**caractérisé en ce que** les profilés d'angle de cadre (4.3.1 à 4.3.4)
- sont chacun accouplés, à une première extrémité, à la première portion de cadre (4.1) et, à une deuxième extrémité, à la deuxième portion de cadre (4.2) et
- comprennent des éléments de liaison (18.1, 18.2, 20 à 22) qui correspondent les uns aux autres au niveau de portions accouplées les unes aux autres et qui sont conçus pour relier en force et/ou par complémentarité de formes les profilés d'angle de cadre (4.3.1 à 4.3.4) à la première portion de cadre (4.1) et à la deuxième portion de cadre (4.2).

3. Coffret de sellerie (1) selon la revendication 2,
**caractérisé en ce que** les éléments de liaison (18.1, 18.2) qui se correspondent font partie d'un fermeture à genouillère (18).

4. Coffret de sellerie (1) selon l'une des revendications précédentes, **caractérisé en ce que** les dimensions des profilés d'angle de cadre (4.3.1 à 4.3.4) sont inférieures aux dimensions d'une surface libre de la partie inférieure (2.1).

5. Coffret de sellerie (1) selon l'une des revendications précédentes,
**caractérisée en ce que**
- l'au moins un ensemble de paroi (5 à 7) comprend plusieurs éléments de paroi (5.1 à 5.4, 6.1 à 6.4, 7.1 à 7.4) en forme de plaque et/ou
- l'au moins un ensemble de porte (8) comprend plusieurs éléments de porte (8.1 à 8.4) en forme de plaque.

6. Coffret de sellerie (1) selon la revendication 5,
**caractérisé en ce que**
- les éléments de paroi (5.1 à 5.4, 6.1 à 6.4, 7.1 à 7.4) sont mobiles les uns par rapport aux autres et/ou
- les éléments de porte (8.1 à 8.4) sont mobiles les uns par rapport aux autres.

7. Coffret de sellerie (1) selon l'une des revendications précédentes,
**caractérisé en ce qu'**un certain nombre de roues (11, 12) sont disposées sur un côté extérieur de l'élément de base (2).
